# EUROPÄISCHE PATENTANMELDUNG

(11) **EP 4 140 847 A1**
(43) Veröffentlichungstag der Anmeldung: **01.03.2023**
(21) Anmeldenummer: 22191753.7
(22) Anmeldetag: 23.08.2022
(51) Int. Cl.: B60W 60/00, B60W 50/14

(54) **FAHRASSISTENZSYSTEM FÜR EIN AUTOMATISIERT FAHRBARES FAHRZEUG UND COMPUTERIMPLEMENTIERTES VERFAHREN ZUM ASSISTIEREN EINES FAHRERS EINES AUTOMATISIERT FAHRBAREN FAHRZEUGS**

(30) Priorität: 24.08.2021 DE 102021209251
(71) Anmelder: Universität Stuttgart, 70174 Stuttgart (DE)
(72) Erfinder: Remlinger, Wolfram, 85049 Ingolstadt (DE); Pomiersky, Philipp, 70193 Stuttgart (DE)
(74) Vertreter: Altmann Stößel Dick Patentanwälte PartG mbB

(57) **Zusammenfassung**

Es wird ein Fahrassistenzsystem (100) für ein automatisiert fahrbares Fahrzeug (102) vorgeschlagen. Das Fahrassistenzsystem (100) umfasst mehrere Sensoren (106) zum Erfassen von Informationen über einen aktuellen Fahrzeugstatus und ein Verkehrsszenario während eines automatisierten Fahrzustand des Fahrzeugs (102), mindestens eine Übermittlungsvorrichtung (108) zum multimodalen Übermitteln der Informationen an einen Fahrer (104) des Fahrzeugs (102), und eine Abgleichvorrichtung (114) zum Abgleichen der übermittelten Informationen und einer Wahrnehmung des Fahrers (104) von den übermittelten Informationen. Weiterhin wird ein computerimplementiertes Verfahren zum Assistieren eines Fahrers (104) eines automatisiert fahrbaren Fahrzeugs (102) vorgeschlagen.

## Beschreibung

### Technisches Gebiet

Die vorliegende Erfindung betrifft ein Fahrassistenzsystem für ein automatisiert fahrbares Fahrzeug, ein computerimplementiertes Verfahren zum Assistieren eines Fahrers eines automatisiert fahrbaren Fahrzeugs und ein Computerprogramm, welches dazu eingerichtet ist, um die Schritte des Verfahrens durchzuführen.

### Technischer Hintergrund

Bei künftigen automatisierten Fahrzeugen, die im sog. SAE Level 3 oder Level 4 selbständig ohne Zutun des Fahrers gesteuert werden, kann das Fahrzeug jederzeit eine Aufforderung zur Fahrerübernahme, den sogenannten Take Over Request (ToR) auslösen. Dann ist der menschliche Fahrer aufgefordert, zügig innerhalb eines definierten Zeitraums von ca. 6 bis 20 Sekunden abhängig von der Auslegung des jeweiligen Fahrzeugs die Steuerung des Fahrzeugs wieder vollumfänglich und verantwortlich von der automatisierten Steuerung zu übernehmen.

Während der Steuerung durch die automatisierte Fahrfunktion trägt der Hersteller des Fahrzeugs die Verantwortung für die sichere und verkehrsgerechte Funktion des Fahrzeugs und der Fahrer darf sich einer Nebentätigkeit widmen, wie beispielsweise Lesen oder einen Film schauen.

Ist der Fahrer bereits eine längere Zeit in seiner passiven Rolle mit einer Nebentätigkeit beschäftigt, so haben sich die Bedingungen der Fahrsituation bezüglich seines letzten Kenntnisstandes zumeist so sehr verändert, dass ihm bei der Aufforderung zur Fahrerübernahme das Situationsbewusstsein, die sogenannte Situation Awareness, weitgehend fehlt. Im Zeitraum bis zur verantwortlichen Übernahme der Steuerung muss der Fahrer also die notwendigen Informationen erfassen, um die wesentliche Kenntnis vom Fahr- und Verkehrszustand wiederzuerlangen.

Wissenschaftliche Experimente bei Automobilherstellern und unterschiedlichen Forschungseinrichtungen in Fahrsimulatoren und Fahrzeugen haben gezeigt, dass dies innerhalb von 6 bis 20 Sekunden möglich ist.

Allerdings wird bei diesen Untersuchungen -soweit bekannt- allgemein von einer günstigen, also eher aufmerksamen Ausgangssituation des Fahrers ausgegangen. Sollte der Fahrer aufgrund besonderer Situationen gedanklich oder emotional noch von seiner Nebentätigkeit gefesselt sein oder er nimmt die aktive Erfassung der äußeren Situation nachlässig vor, kann das erreichte Situationsbewusstsein möglicherweise unzureichend sein, um eine sichere Übernahme der Fahraufgabe zu gewährleisten.

US 9,135,803 B1 beschreibt ein Verfahren, System und computerlesbares Medium zum Überwachen eines Fahrzeugführers während des Fahrzeugbetriebs, um zu bestimmen, ob der Fahrzeugführer abgelenkt ist, und zum Bewirken einer Entlastungsreaktion, wenn festgestellt wird, dass eine Ablenkung vorliegt. Der Fahrzeugführer, die das Fahrzeug umgebende Umgebung oder auf das Fahrzeug einwirkende Kräfte können unter Verwendung einer Vielzahl von Sensoren überwacht werden, einschließlich optischer Sensoren, Beschleunigungsmesser oder biometrischer Sensoren (z. B. Hautleitfähigkeit, Herzfrequenz oder Stimmmodulation). Wenn festgestellt wird, dass der Fahrzeugführer abgelenkt ist, wird basierend auf den Sensordaten eine Warnung oder eine andere Entlastungsreaktion implementiert. In einigen Ausführungsformen können Entlastungsmaßnahmen ergriffen werden, um eine Ablenkung des Fahrzeugführers zu vermeiden.

US 9,786,192 B2 beschreibt ein Verfahren zum Bewerten einer Bereitschaft eines Fahrers für einen Übergang zwischen verschiedenen Betriebsmodi eines autonomen Fahrzeugs. Die Bereitschaft eines Fahrzeugführers für einen Übergang kann bewertet werden, insbesondere beim Übergang von einem ersten Betriebsmodus in einen zweiten Betriebsmodus, der einen höheren manuellen Eingriffsgrad aufweist als der erste Betriebsmodus. Es kann bestimmt werden, ob ein Betriebsmodusübergangsereignis aufgetreten ist, während das Fahrzeug im ersten Betriebsmodus betrieben wird. Als Reaktion auf das Bestimmen, dass ein Betriebsmodusübergangsereignis aufgetreten ist, kann eine Hörprobe von einem Fahrzeugfahrer gesammelt werden. Auf der Grundlage des gesammelten akustischen Musters kann bestimmt werden, ob der Fahrzeugführer bereit oder nicht bereit ist, den höheren Grad an manueller Beteiligung für den zweiten Betriebsmodus bereitzustellen.

US 2019/0143990 Al beschreibt eine Vorrichtung und ein Verfahren zum Schätzen einer Bereitschaft eines Fahrers. Ein Verfahren zum Schätzen der Fahrerbereitschaft in einem Fahrzeug zum Durchführen von automatisiertem Fahren umfasst das Analysieren eines Biosignals und eines Verhaltens eines Fahrers durch gesammelte Fahrerinformationen, das Bestimmen eines sensorischen Nutzungszustands des Fahrers aus dem Verhalten des Fahrers, das Ableiten von Aufgabenchancen Kandidaten, die vom Fahrer während der Fahrt wahrscheinlich auftreten, aus dem körperlich sensorischen Nutzungszustand des Fahrers auf eine Aufgabe zu schließen, eine Absicht des Fahrers auf Basis der abgeleiteten Chancen der Aufgabenkandidaten zu bestimmen und die Fahrerbereitschaft anhand der Absicht des Fahrers zu berechnen.

DE 10 2018 210 375 A1 beschreibt ein Fahrerassistenzsystem für ein Fahrzeug mit einer Umfelderfassungseinrichtung zur Erfassung von Umfeldobjekten und Generierung zumindest einer Ausgabedateneinheit auf Basis der Umfeldobjekte und Generierung zumindest einer Solldateneinheit, auf Basis der zumindest einen Ausgabendateneinheit, und mit einer Ausgabevorrichtung zur Ausgabe der zumindest einen Ausgabedateneinheit und mit einer Eingabevorrichtung zur Erfassung zumindest einer fahrergenerierten Istdateneinheit, und mit mindestens einem ersten Betriebssystem zum Betreiben des Fahrzeugs in einer ersten Autonomiestufe und mindestens einem zweiten Betriebssystem zum Betreiben des Fahrzeugs in einer zweiten Autonomiestufe, wobei die erste Autonomiestufe höher als die zweite Autonomiestufe ist, wobei die Eingabevorrichtung für eine interaktive Eingabe der zumindest einen fahrergenerierten Istdateneinheit ausgebildet ist und eine Verarbeitungseinheit vorgesehen ist, zur Bewerkstelligung eines Soll-Ist-Vergleichs zwischen der zumindest einen Solldateneinheit und der zumindest einen fahrergenerierten Istdateneinheit bei einem Wechselsignal, wobei bei einem positiven Soll-Ist-Vergleich eine Durchführung eines Wechsels von dem ersten Betriebssystem in das zweite Betriebssystem vorgesehen ist. Weiterhin beschrieben ist ein Fahrzeug, ein Verfahren zum Betreiben des Fahrerassistenzsystems, ein Computerprogramm und ein computerlesbares Speichermedium.

DE 10 2015 224 555 A1 beschreibt ein Verfahren zum Betreiben eines Fahrzeugs.

DE 10 2016 220 549 A1 beschreibt ein Verfahren und eine Vorrichtung zum Unterstützen eines Fahrers beim Deaktivieren eines hochautomatisierten Fahrmodus eines Fahrzeugs.

Trotz zahlreicher Vorteile beinhalten diese Verfahren und Vorrichtungen noch Verbesserungspotenzial. Insbesondere sind die derzeit angedachten Lösungen weder besonders dazu ausgerichtet, die rasche Herstellung des Situationsbewusstseins durch den Fahrer kognitiv optimal zu unterstützen, noch findet eine Kontrolle der aufgenommenen Informationen oder gar des erreichten Grades des Situationsbewusstseins statt. US 9,135,803 B1 beschreibt beispielsweise die Erfassung einer Fahrerablenkung von der Fahrzeugführung während einer manuellen Fahrmodus, d.h. einer Fahrzeugführung durch den Fahrer. US 9,786,192 B2 beschreibt die Erfassung und Speicherung einiger physiologischer Parameter des Fahrers, um seine Bereitschaft zur Fahrzeugführung festzustellen. Die körperliche und geistige Bereitschaft stellt jedoch nur ein notwendiges Kriterium für die Übernahme der Fahrzeugführung durch den Fahrer dar. Erst ein ausreichendes Situationsbewusstsein ist auch hinreichend, um die anstehende Aufgabe zu bewältigen. Damit befasst sich diese Patentschrift jedoch nicht. US 2019/0143990 Al beschreibt eine Methode zur Analyse des Fahrerzustands und Einschätzung, ob ein ausreichend hoher Grad der Übernahmebereitschaft besteht. Dabei wird neben den visuellen, auditiven, kognitiven und psychomotorischen Faktoren auch den Aspekt der Situation Awareness als Kriterium genannt. Allerdings wird nur beschrieben den Zustand zu erfassen, um eine Übernahme zu gestatten bzw. zu unterbinden. Dieses Verfahren entspricht einem wissenschaftlichen Analyseverfahren, um eine objektive Klassifikation vorzunehmen. Es bietet jedoch keine Assistenz für eine erforderliche Fahrerübernahme bei nicht ausreichender Übernahmebereitschaft aufgrund von mangelnder Situation Awareness.

### Aufgabe der Erfindung

Es wäre daher wünschenswert, ein Fahrassistenzsystem und ein Verfahren bereitzustellen, welche die Nachteile bekannter Vorrichtungen und Verfahren zumindest weitgehend vermeiden. Insbesondere soll die Informationsübermittlung bei einer Aufforderung an einen Fahrer zur Übernahme von einem automatisierten Fahrzeugmodus zu einem manuellen Fahrzeugmodus kognitiv effektiver zu gestalten und außerdem eine Kontrolle der durch den Fahrer erfassten Informationen vorzunehmen, also quasi eine Lernerfolgsüberprüfung vornehmen, die optional rechtlich verbindlich dokumentiert wird.

### Allgemeine Beschreibung der Erfindung

Diese Aufgabe wird adressiert durch ein Fahrassistenzsystem und ein Verfahren mit den Merkmalen der unabhängigen Patentansprüche. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf, "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt betrifft die vorliegende Erfindung ein Fahrassistenzsystem für ein automatisiert fahrbares Fahrzeug. Das Fahrassistenzsystem umfasst mehrere Sensoren zum Erfassen von Informationen über einen aktuellen Fahrzeugstatus und ein Verkehrsszenario während eines automatisierten Fahrzustand des Fahrzeugs. Das Fahrassistenzsystem umfasst weiterhin mindestens eine Übermittlungsvorrichtung zum multimodalen Übermitteln der Informationen an einen Fahrer des Fahrzeugs. Das Fahrassistenzsystem umfasst weiterhin eine Abgleichvorrichtung zum Abgleichen der übermittelten Informationen und einer Wahrnehmung des Fahrers von den übermittelten Informationen. Die Informationen sind mindestens eine Information ausgewählt aus der Gruppe bestehend aus: Grund für eine Übernahmeanforderung, Straßenname, Straßenart, aktuelle Fahrspur, aktuelle Fahrrichtung, aktuelle Geschwindigkeit, aktuell gültige Verkehrsbeschränkung, aktueller Umgebungszustand von Sicht, aktueller Umgebungszustand der Straße, Typen der umgebenden Fahrzeuge, Positionen der umgebenden Fahrzeuge, Zustand der umgebenden Fahrzeuge, Gegenverkehr, Geschwindigkeiten der umgebenden Fahrzeuge, Wettersituation, Fahrbahnzustand und Fahrtziel.

Entsprechend ist das erfindungsgemäße Fahrassistenzsystem eingerichtet, verschiedene Informationen über einen aktuellen Fahrzeugstatus und ein Verkehrsszenario während eines automatisierten oder autonomen Betriebs des Fahrzeugs zu erfassen. Entsprechend liegt in diesem Fahrzustand eine Fahrzeugführung durch die automatische Steuerung des Fahrzeugs und nicht durch den Fahrer vor. Während dieses Fahrzustands kann eine Übernahmeaufforderung an den Fahrer erfolgen. Die erfassten erforderlichen Informationen über den aktuellen Fahrzeugstatus, das vorliegende Verkehrsszenario und die Verkehrssituation werden mittels einer multimedialen Übermittlung dem Fahrer zugeführt, so dass eine multimodale Informationsaufnahme stattfindet, die nach derzeitigem Stand der Kognitionswissenschaft ein weitaus bewussteres Verständnis der Informationen erzeugt. Die vom Fahrer wahrgenommenen Informationen werden dann mit den übermittelten Informationen abgeglichen. Es erfolgt somit ein interaktiv geführter Systemabgleich zweier Kognitionszustände, nämlich von Mensch und Fahrzeug. Hier sollen die vom Menschen mit seinen Augen und weiteren Sinnen beobachteten Wahrnehmungen mit dem von der Sensorik erkannten Verkehrszustand rund um das Ego-Fahrzeug in Übereinstimmung gebracht werden. Man beachte, dass dabei dem Fahrer die für eine Übernahme relevante(n) Information(en) in Aussageform übermittelt werden. So informiert das System den Fahrer und fordert diesen auf, zu übernehmen, wenn er tatsächlich die Situation erfasst hat. Es ist explizit möglich, dass der Fahrer sich zuvor mit anderen Dingen beschäftigt hat. Eine kontinuierliche Aufmerksamkeit des Fahrers ist also wie bei den anderen herkömmlich bekannten Systemen nicht erforderlich.

Die Informationen sind bevorzugt mehrere Informationen ausgewählt aus der Gruppe bestehend aus: Grund für eine Übernahmeanforderung, Straßenname, Straßenart, aktuelle Fahrspur, aktuelle Fahrrichtung, aktuelle Geschwindigkeit, aktuell gültige Verkehrsbeschränkung, aktueller Umgebungszustand von Sicht, aktueller Umgebungszustand der Straße, Typen der umgebenden Fahrzeuge, Positionen der umgebenden Fahrzeuge, Zustand der umgebenden Fahrzeuge, Gegenverkehr, Geschwindigkeiten der umgebenden Fahrzeuge, Wettersituation, Fahrbahnzustand und Fahrtziel.

Die Sensoren können eine Kamera, einen GPS-Sensor, einen LIDAR-Sensor, einen Ultraschall-Sensor, einen Radar-Sensor, einen Geschwindigkeitssensor, einen Kompass und/oder ein Gyroskop umfassen. Derartige Sensoren sind in heutigen Fahrzeugen bereits verbaut, so dass keine zusätzlichen Kosten für das Vorsehen von zusätzlichen Sensoren für die Implementierung des Fahrassistenzsystems anfallen.

Die Übermittlungsvorrichtung kann mindestens eine visuelle Ausgabevorrichtung zum visuellen Übermitteln der Informationen an den Fahrer und eine weitere Ausgabevorrichtung zum Übermitteln der Informationen an den Fahrer in einer von visuell verschiedenen Form umfassen. Bevorzugt ist die weitere Ausgabevorrichtung eine akustische Ausgabevorrichtung zum akustischen Übermitteln der Informationen an den Fahrer. Es wird jedoch explizit betont, dass die weitere Ausgabevorrichtung grundsätzlich jede Ausgabevorrichtung sein kann, die die Informationen in einer von visuell verschiedenen Form übermitteln kann, wie beispielsweise in taktiler Form. Entsprechend werden die Informationen auf mindestens zwei verschiedene Kommunikationsarten übermittelt, was ein weitaus bewussteres Verständnis der Informationen erzeugt. Dies erfolgt dadurch, dass die wichtigen Informationen zur Übernahme des Fahrzeugs nicht nur z.B. auf einem Display visuell dargestellt sind, sondern auch akustisch übermittelt werden. Diese Form der multimodalen Informationsübermittlung garantiert eine hohe kognitive Erfassung der Informationen, da der Fahrer den Sinn des gesagten erfassen und mit der entsprechend visuell dargebotenen Information in Einklang bringen muss. Dies wird beispielsweise bei der Durchführung von Prozeduren durch Piloten von Luftfahrzeugen ähnlich praktiziert.

Die visuelle Ausgabevorrichtung kann zum Darstellen der übermittelten Informationen als Checkliste ausgebildet sein. Während die Informationen akustisch vermittelt werden, soll der Fahrer auf einem Touchscreen die zugehörigen visuell übermittelten Informationen einzeln mit einer Fingerberührung jeweils nah an der Informationsdarstellung bestätigen durch beispielsweise abhaken der Checkliste.

Die visuelle Ausgabevorrichtung kann zum Variieren einer Darstellung der übermittelten Informationen ausgebildet sein. Dabei kann nicht nur die Art der Darstellung, sondern auch die Reihenfolge der dargestellten Informationen und/oder die Position der Darstellung variiert werden. Der Fahrer soll dabei ganz und gar nicht auf seinem Display eine Liste in einer vorgegebenen Reihenfolge abhaken. Er muss vielmehr beispielsweise das beschriebene Element in einem Übersichtsplan der Verkehrssituation an der richtigen Stelle relativ zum eigenen Fahrzeug mit dem Finger markieren oder auswählen. Dadurch wird verhindert, dass eine solche Abfrage zur Routine wird. Entsprechend wird hierdurch die kognitive Erfassung der Informationen verbessert.

Die visuelle Ausgabevorrichtung kann zum Gewichten der Darstellung der übermittelten Informationen ausgebildet sein. Dadurch kann festgelegt werden, zu welchem Zeitpunkt kritische und unkritische Informationen übermittelt werden und so entsprechend die Aufmerksamkeit des Fahrers gezielt gelenkt werden.

Beispielsweise kann die visuelle Ausgabevorrichtung zum Anpassen einer Reihenfolge der Darstellung der übermittelten Informationen an eine Geschwindigkeit einer Veränderung der erfassten Informationen über den aktuellen Fahrzeugstatus und das Verkehrsszenario ausgebildet sein. Jede einzelne Verkehrssituation verändert aufgrund der jeweiligen Kritikalität und der Variation der anderen Verkehrsteilnehmer in der Verkehrssituation die Reihenfolge der Abfrage. Sie kann beginnen, den Fahrer die relativ unkritischen und sich wenig verändernden Elemente abzufragen, und fortschreitend potentiell gefährlichere Bereiche zu checken.

Die Abgleichvorrichtung kann eine Eingabevorrichtung zum Eingeben der Wahrnehmung des Fahrers umfassen. Dadurch kann zufällig richtige oder unbewusste Rückkoppelung der übermittelten Informationen seitens des Fahrers ausgeschlossen werden. Es wird explizit betont, dass die Eingabevorrichtung nur optional, also nicht immer notwendig, ist.

Die Eingabevorrichtung kann zum manuellen Eingeben der Wahrnehmung des Fahrers ausgebildet sein. Dadurch wird der Fahrer gezwungen an mindestens einer vorbestimmten Position eine Bestätigung seiner Wahrnehmung vorzunehmen.

Alternativ oder zusätzlich kann die Eingabevorrichtung zum optischen Eingeben der Wahrnehmung des Fahrers ausgebildet sein. Dadurch kann eine Ablenkung des Fahrers verringert werden, da dieser beispielsweise nicht gezwungen wird, seine Hand vom Lenkrad zu entfernen.

Beispielsweise kann die Eingabevorrichtung eine Blickerfassungsvorrichtung aufweisen oder als Blickerfassungsvorrichtung ausgebildet sein. Eine solche Blickerfassungsvorrichtung ist bereits in vielen Fahrzeugen entweder in Entwicklung oder bereits verbaut, da auch Einschlafwarnsysteme eine solche Kamera erfordern. Während die Informationen akustisch übermittelt werden, muss der Fahrer jeweils den Ort der visuellen Informationsübermittlung mit seinen Augen fixieren. Dies wird beispielsweise durch ein im Fahrzeug verbautes Eye Tracking System registriert. Hierbei muss die visuelle Informationsdarstellung nicht notwendigerweise konzentriert auf einem Display dargestellt werden, sondern kann auch die Sicht durch die Scheiben auf die umgebenden Fahrzeuge direkt, oder die Rückspiegel oder ein Head-up-Display, oder Anzeigen am Rand der Scheiben oder das Kombiinstrument oder einen Touchscreen in der Mittelkonsole betreffen. Durch diese Form einer Überprüfung der Informationserfassung kann man beim Fahrer zusätzlich eine hohe Wahrnehmungsqualität der Raum-Lage-Informationen in Bezug auf seine Umgebung erzielen.

Alternativ oder zusätzlich kann die Eingabevorrichtung zum akustischen Eingeben der Wahrnehmung des Fahrers ausgebildet sein. Beispielsweise ließen sich Fragen des Fahrzeugs auch durch ein Dialogsystem, also mittels Spracheingabe des Fahrers beantworten. Hier müssten die Fragen offen formuliert sein und der Fahrer muss seine Wahrnehmung mit zusätzlich wahrgenommenen Informationen artikulieren, die das System wiederum als stimmig bewerten muss.

Die Übermittlungsvorrichtung kann zum Wiederholen der Übermittlung der Informationen ausgebildet sein, falls die Abgleichvorrichtung eine Abweichung der Wahrnehmung von den übermittelten Informationen feststellt. So ist es beispielsweise erforderlich, bei fehlerhaften Antworten/Reaktionen des Fahrers eine erneute Nachfrage zu generieren. Wenn sich, was häufig zu erwarten ist, während des Abfrageprozesses die Situation verändern, so ist ebenfalls eine teilweise Neuabfrage erforderlich, damit der Fahrer aufgefordert wird, die Veränderung zu überprüfen.

Das Fahrassistenzsystem kann weiterhin eine Freigabevorrichtung umfassen. Die Freigabevorrichtung kann ausgebildet sein zum Freigeben eines Übergangs von dem automatisierten Fahrzustand des Fahrzeugs in einen manuellen Fahrzustand des Fahrzeugs, falls die Abgleichvorrichtung eine Übereinstimmung der Wahrnehmung mit den übermittelten Informationen feststellt. Durch die oben beschriebenen Erläuterungen wird vielleicht deutlich, dass es sich bei der Idee um ein interaktives multimediales Dialogsystem handelt, das durch seine situationsadaptive Dialogführung sicherstellen soll, dass das Kognitionsniveau eines menschlichen Fahrers inhaltlich übereinstimmend dem Informationsniveau der kognitiven Fahrzeugsensorik angepasst wird. Eine Freischaltung der verantwortlichen Fahrzeugführung auf den menschlichen Fahrer erfolgt dabei planmäßig nur dann, wenn sich die Kritikalität der Wahrnehmungsdifferenzen unterhalb eines vorgegebenen Grenzwertes bewegt. Es versteht sich jedoch, dass eine Freischaltung der verantwortlichen Fahrzeugführung auf den menschlichen Fahrer trotz festgestellter Wahrnehmungseinschränkungen durch selbstverantwortliche Überstimmung des Systems durch den Fahrer erzwungen werden kann. So muss eine Übersteuerbarkeit durch den menschlichen Fahrer möglich sein, um eine Konformität zum "Wiener Übereinkommen der Verkehrssicherheit" der UN zu garantieren. Die Ablehnung der Übernahme kann also in der Umsetzung im Fahrzeug derzeit nur empfehlenden Charakter haben.

Das Fahrassistenzsystem kann weiterhin eine Speichervorrichtung umfassen, die zum Speichern der von den Sensoren erfassten Informationen, der von der Übermittlungsvorrichtung übermittelten Informationen und der Wahrnehmung des Fahrers ausgebildet ist. Die Übergabeprozedur inklusive aller Sensordaten und gegebenen wie aufgenommenen Informationen werden beispielsweise in einer Art Black Box gespeichert. Dadurch wird eine rechtlich relevante Dokumentation der Übergabeprozedur realisiert.

In einem weiteren Aspekt betrifft die vorliegende Erfindung ein computerimplementiertes Verfahren zum Assistieren eines Fahrers eines automatisiert fahrbaren Fahrzeugs Das Verfahren umfasst die folgenden Schritte, bevorzugt in der angegebenen Reihenfolge:
- Erfassen von Informationen über einen aktuellen Fahrzeugstatus und ein Verkehrsszenario während eines automatisierten Fahrzustand des Fahrzeugs,
- multimodales Übermitteln der Informationen an den Fahrer, und
- Abgleichen der übermittelten Informationen und einer Wahrnehmung des Fahrers von den übermittelten Informationen.

Die Informationen sind mindestens eine Information ausgewählt aus der Gruppe bestehend aus: Grund für eine Übernahmeanforderung, Straßenname, Straßenart, aktuelle Fahrspur, aktuelle Fahrrichtung, aktuelle Geschwindigkeit, aktuell gültige Verkehrsbeschränkung, aktueller Umgebungszustand von Sicht, aktueller Umgebungszustand der Straße, Typen der umgebenden Fahrzeuge, Positionen der umgebenden Fahrzeuge, Zustand der umgebenden Fahrzeuge, Gegenverkehr, Geschwindigkeiten der umgebenden Fahrzeuge, Wettersituation, Fahrbahnzustand und Fahrtziel.

Entsprechend werden bei dem erfindungsgemäßen Verfahren verschiedene Informationen über einen aktuellen Fahrzeugstatus und ein Verkehrsszenario während eines automatisierten oder autonomen Betriebs des Fahrzeugs erfasst. Dabei liegt in diesem Fahrzustand eine Fahrzeugführung durch die automatische Steuerung des Fahrzeugs und nicht durch den Fahrer vor. Während dieses Fahrzustands kann eine Übernahmeaufforderung an den Fahrer erfolgen. Die erfassten erforderlichen Informationen über den aktuellen Fahrzeugstatus, das vorliegende Verkehrsszenario und die Verkehrssituation werden mittels einer multimedialen Übermittlung dem Fahrer zugeführt, so dass eine multimodale Informationsaufnahme stattfindet, die nach derzeitigem Stand der Kognitionswissenschaft ein weitaus bewussteres Verständnis der Informationen erzeugt. Die vom Fahrer wahrgenommenen Informationen werden dann mit den übermittelten Informationen abgeglichen. Es erfolgt somit ein interaktiv geführter Systemabgleich zweier Kognitionszustände, nämlich von Mensch und Fahrzeug. Hier sollen die vom Menschen mit seinen Augen beobachteten Wahrnehmungen mit dem von der Sensorik erkannten Verkehrszustand rund um das Ego-Fahrzeug in Übereinstimmung gebracht werden. Man beachte, dass dabei dem Fahrer die für eine Übernahme relevante(n) Information(en) in Aussageform übermittelt werden. So informiert das System den Fahrer und fordert diesen auf, zu übernehmen, wenn er tatsächlich die Situation erfasst hat. Es ist explizit möglich, dass der Fahrer sich zuvor mit anderen Dingen beschäftigt hat. Eine kontinuierliche Aufmerksamkeit des Fahrers ist also wie bei den anderen herkömmlich bekannten Systemen nicht erforderlich.

Die Informationen sind bevorzugt mehrere Informationen ausgewählt aus der Gruppe bestehend aus: Grund für eine Übernahmeanforderung, Straßenname, Straßenart, aktuelle Fahrspur, aktuelle Fahrrichtung, aktuelle Geschwindigkeit, aktuell gültige Verkehrsbeschränkung, aktueller Umgebungszustand von Sicht, aktueller Umgebungszustand der Straße, Typen der umgebenden Fahrzeuge, Positionen der umgebenden Fahrzeuge, Zustand der umgebenden Fahrzeuge, Gegenverkehr, Geschwindigkeiten der umgebenden Fahrzeuge, Wettersituation, Fahrbahnzustand und Fahrtziel.

Die Sensoren können eine Kamera, einen GPS-Sensor, einen LIDAR-Sensor, einen Ultraschall-Sensor, einen Radar-Sensor, einen Geschwindigkeitssensor, einen Kompass und/oder ein Gyroskop umfassen. Derartige Sensoren sind in heutigen Fahrzeugen bereits verbaut, so dass keine zusätzlichen Kosten für das Vorsehen von zusätzlichen Sensoren für die Implementierung des Fahrassistenzsystems anfallen.

Das Verfahren kann weiterhin zumindest visuelles Übermitteln der Informationen an den Fahrer und Übermitteln der Informationen an den Fahrer in einer von visuell verschiedenen Form umfassen. Bevorzugt umfasst das Verfahren visuelles und akustisches Übermitteln der Informationen an den Fahrer. Entsprechend werden die Informationen auf mindestens zwei verschiedene Kommunikationsarten übermittelt, was ein weitaus bewussteres Verständnis der Informationen erzeugt. Dies erfolgt dadurch, dass die wichtigen Informationen zur Übernahme des Fahrzeugs nicht nur z.B. auf einem Display visuell dargestellt sind, sondern auch akustisch übermittelt werden. Diese Form der multimodalen Informationsübermittlung garantiert eine hohe kognitive Erfassung der Informationen, da der Fahrer den Sinn des gesagten erfassen und mit der entsprechend visuell dargebotenen Information in Einklang bringen muss. Dies wird beispielsweise bei der Durchführung von Prozeduren durch Piloten von Luftfahrzeugen ähnlich praktiziert.

Das Verfahren kann weiterhin Darstellen der übermittelten Informationen als Checkliste umfassen. Während die Informationen akustisch vermittelt werden, soll der Fahrer auf einem Touchscreen die zugehörigen visuell übermittelten Informationen einzeln mit einer Fingerberührung jeweils nah an der Informationsdarstellung bestätigen durch beispielsweise abhaken der Checkliste.

Das Verfahren kann weiterhin Variieren einer Darstellung der übermittelten Informationen umfassen. Dabei kann nicht nur die Art der Darstellung, sondern auch die Reihenfolge der dargestellten Informationen und/oder die Position der Darstellung variiert werden. Der Fahrer soll dabei ganz und gar nicht auf seinem Display eine Liste in einer vorgegebenen Reihenfolge abhaken. Er muss vielmehr beispielsweise das beschriebene Element in einem Übersichtsplan der Verkehrssituation an der richtigen Stelle relativ zum eigenen Fahrzeug mit dem Finger markieren oder auswählen. Dadurch wird verhindert, dass eine solche Abfrage zur Routine wird. Entsprechend wird hierdurch die kognitive Erfassung der Informationen verbessert.

Das Verfahren kann weiterhin Gewichten der Darstellung der übermittelten Informationen umfassen. Dadurch kann festgelegt werden, zu welchem Zeitpunkt kritische und unkritische Informationen übermittelt werden und so entsprechend die Aufmerksamkeit des Fahrers gezielt gelenkt werden.

Das Verfahren kann weiterhin Anpassen einer Reihenfolge der Darstellung der übermittelten Informationen an eine Geschwindigkeit einer Veränderung der erfassten Informationen über den aktuellen Fahrzeugstatus, das vorliegende Verkehrsszenario und das Verkehrsszenario umfassen. Jede einzelne Verkehrssituation verändert aufgrund der jeweiligen Kritikalität und der Variation der anderen Verkehrsteilnehmer in der Verkehrssituation die Reihenfolge der Abfrage. Sie kann beginnen, den Fahrer die relativ unkritischen und sich wenig verändernden Elemente abzufragen, und fortschreitend potentiell gefährlichere Bereiche zu checken.

Das Verfahren kann weiterhin Eingeben der Wahrnehmung des Fahrers umfassen. Dadurch kann zufällig richtige oder unbewusste Rückkoppelung der übermittelten Informationen seitens des Fahrers ausgeschlossen werden.

Das Verfahren kann weiterhin manuelles Eingeben der Wahrnehmung des Fahrers umfassen. Dadurch wird der Fahrer gezwungen an mindestens einer vorbestimmten Position eine Bestätigung seiner Wahrnehmung vorzunehmen.

Das Verfahren kann weiterhin optisches Eingeben der Wahrnehmung des Fahrers umfassen. Dadurch kann eine Ablenkung des Fahrers verringert werden, da dieser beispielsweise nicht gezwungen wird, seine Hand vom Lenkrad zu entfernen. Beispielsweise kann eine Eingabevorrichtung eine Blickerfassungsvorrichtung aufweisen oder als Blickerfassungsvorrichtung ausgebildet sein. Während die Informationen akustisch übermittelt werden, muss der Fahrer jeweils den Ort der visuellen Informationsübermittlung mit seinen Augen fixieren. Dies wird durch ein im Fahrzeug verbautes Eye Tracking System registriert. Hierbei muss die visuelle Informationsdarstellung nicht notwendigerweise konzentriert auf einem Display dargestellt werden, sondern kann auch die Sicht durch die Scheiben auf die umgebenden Fahrzeuge direkt, oder die Rückspiegel oder ein Head-up-Display, oder Anzeigen am Rand der Scheiben oder das Kombiinstrument oder einen Touchscreen in der Mittelkonsole betreffen. Durch diese Form einer Überprüfung der Informationserfassung kann man beim Fahrer zusätzlich eine hohe Wahrnehmungsqualität der Raum-Lage-Informationen in Bezug auf seine Umgebung erzielen.

Das Verfahren kann weiterhin akustisches Eingeben der Wahrnehmung des Fahrers umfassen. Beispielsweise ließen sich Fragen des Fahrzeugs auch durch Spracheingabe des Fahrers beantworten. Hier müssten die Fragen offen formuliert sein und der Fahrer muss seine Wahrnehmung mit zusätzlich wahrgenommenen Informationen artikulieren, die das System wiederum als stimmig bewerten muss.

Das Verfahren kann weiterhin Wiederholen der Übermittlung der Informationen umfassen, falls eine Abweichung der Wahrnehmung von den übermittelten Informationen festgestellt wird. So ist es beispielsweise erforderlich, bei fehlerhaften Antworten/Reaktionen des Fahrers eine erneute Nachfrage zu generieren. Wenn sich, was häufig zu erwarten ist, während des Abfrageprozesses die Situation verändern, so ist ebenfalls eine teilweise Neuabfrage erforderlich, damit der Fahrer aufgefordert wird, die Veränderung zu überprüfen.

Das Verfahren kann weiterhin Freigeben eines Übergangs von dem automatisierten Fahrzustand des Fahrzeugs in einen manuellen Fahrzustand des Fahrzeugs umfassen, falls eine Übereinstimmung der Wahrnehmung mit den übermittelten Informationen festgestellt wird. Durch die oben beschriebenen Erläuterungen wird vielleicht deutlich, dass es sich bei der Idee um ein interaktives multimediales Dialogsystem handelt, das durch seine situationsadaptive Dialogführung sicherstellen soll, dass das Kognitionsniveau eines menschlichen Fahrers inhaltlich übereinstimmend dem Informationsniveau der kognitiven Fahrzeugsensorik angepasst wird. Eine Freischaltung der verantwortlichen Fahrzeugführung auf den menschlichen Fahrer erfolgt nur dann, wenn sich die Kritikalität der Wahrnehmungsdifferenzen unterhalb eines vorgegebenen Grenzwertes bewegt.

Das Verfahren kann weiterhin Speichern der erfassten Informationen, der übermittelten Informationen und der Wahrnehmung des Fahrers umfassen. Die Übergabeprozedur inklusive aller Sensordaten und gegebenen wie aufgenommenen Informationen werden beispielsweise in einer Art Black Box gespeichert. Dadurch wird eine rechtlich relevante Dokumentation der Übergabeprozedur realisiert.

In einem weiteren Aspekt betrifft die vorliegende Erfindung ein Computerprogramm, das dazu eingerichtet ist, bei Ablauf auf einem Computer oder Computer-Netzwerk die Schritte des hierin beschriebenen Verfahrens auszuführen. Das Computerprogramm kann hierbei insbesondere in einem elektronischen Speicher vorgehalten werden. Der elektronische Speicher kann hierbei insbesondere in einen Computer, einen Mikrocomputer oder einen programmierbaren Chip, z.B. eine anwendungsspezifische integrierte Schaltung (engl. *application-specific integrated circuit*; ASIC) oder ein FPGA (engl. *field-programmable gate Array*) eingebracht sein. Alternativ oder zusätzlich kann das Computerprogramm extern, insbesondere auf einem Server oder in einer Cloud, gespeichert und online zur Verfügung gestellt werden.

Durch das erfindungsgemäße Fahrassistenzsystem und Verfahren wird ein multimediales Verfahren zu einer effektiven multimodalen kognitiven Unterstützung der Wahrnehmung der Informationsübermittlung an den Fahrer zur Gewinnung des Situationsbewusstseins bei der Fahrerübernahme von automatisierten Fahrzeugen realisiert. Des Weiteren wird eine effektive Kontrolle der Informationswahrnehmung durch eine Funktion im Fahrzeug, um eine sichere Erfassung des Situationsbewusstseins des Fahrers vor dem Abschluss der effektiven Fahrerübergabe mit einer Möglichkeit zur Dokumentation realisiert.

Zusätzliche Vorteile, die erzielt werden, sind eine Erhöhung der Verkehrssicherheit nach der Fahrerübernahme von automatisierten Fahrzeugen durch Fahrer mit einem höheren Situationsbewusstsein. Weiterhin kann der Hersteller von automatisierten Fahrzeugen auf diese Weise sicherstellen, dass der Fahrer eines Fahrzeugs seiner Marke tatsächlich das erforderliche Situationsbewusstsein aufweist, um das Fahrzeug sicher fortzubewegen. Die Wahrscheinlichkeit bzw. Häufigkeit von Rechtsstreitigkeiten zwischen Fahrer und Hersteller aufgrund von Unfällen unmittelbar nach der Fahrerübernahme kann dadurch vermutlich reduziert werden, da dokumentiert ist, welche Informationen das Fahrzeug dem Fahrer zur Verfügung gestellt hat und ob der Fahrer diese richtig aufgenommen hat.

Der Begriff "Fahrassistenzsystem", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine elektronische Zusatzeinrichtung in Kraftfahrzeugen oder Flugzeugen zur Unterstützung des Fahrers in bestimmten Fahrsituationen beziehen. Hierbei stehen oft Sicherheitsaspekte, aber auch die Steigerung des Fahrkomforts im Vordergrund. Fahrerassistenzsysteme greifen teilautonom oder autonom in Antrieb (z. B. Gas, Bremse), Steuerung (z. B. Park-Lenk-Assistent) oder Signalisierungseinrichtungen des Fahrzeuges ein oder warnen durch geeignete Mensch-Maschine-Schnittstellen den Fahrer kurz vor oder während kritischer Situationen. Derzeit sind die meisten Fahrerassistenzsysteme so konzipiert, dass die Verantwortung beim Fahrer bleibt (er also autonome Eingriffe in der Regel "übersteuern" kann) und der damit nicht entmündigt wird.

Der Regeleingriff bzw. die Signalisierungsfunktionen von Fahrerassistenzsystemen setzen Wissen bezüglich der aktuellen Fahrsituation voraus, weshalb verschiedene Arten von Sensoren am und im Fahrzeug vorgesehen sind. Dies können im Falle von ESP (Elektronisches Stabilitätsprogramm) und ABS Sensoren sein, die die Raddrehzahl und/oder die Gierrate (= Drehgeschwindigkeit des Fahrzeuges um die Vertikalachse), sowie die Längs- und Querbeschleunigung bestimmen. Weitergehende Systeme wie ACC oder Abstandswarner benötigen zusätzlich Informationen bezüglich des Fahrzeugumfeldes. Für diese Art von Assistenzsystemen kommen verschiedene Arten von Umfeldsensorik zum Einsatz. Im Rahmen der vorliegenden Erfindung sind als Sensoren bevorzugt vorgesehen, wobei diese bereits im Fahrzeug vorhanden sein können: Ultraschall (Einparkhilfe), Radar (Spurwechselassistent, automatischer Abstandswarner), Lidar (Totwinkel-Überwachung, automatischer Abstandswarner, Abstandsregelung, Pre-Crash und Pre-Brake), Kamera (Spurverlassenswarnung, Verkehrszeichenerkennung, Spurwechselassistent, Totwinkel-Überwachung, Notbremssystem zum Fußgängerschutz. Teilweise sind auch Kombinationen mehrerer Sensorsysteme (Sensordatenfusion) notwendig.

Der Begriff "automatisiert fahrbares Fahrzeug", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Fahrzeug beziehen, das sich weitgehend autonom verhält. Hierbei kann zwischen assistiertem, automatisiertem und autonomen Fahren unterschieden werden. Fahrzeuge mit assistierenden und automatisierten Systemen, die sich ähnlich wie Flugzeuge im Autopilotmodus verhalten, können also Lenk-, Blink-, Beschleunigungs- und Bremsmanöver längs und quer der Fahrspur ohne menschliches Eingreifen durchführen. Abhängig vom Automatisierungsgrad, spricht man bei den höchsten Stufen von autonomen Fahren (Hoch- und Vollautomatisierung, Level 4 + 5). Häufig wird kontinuierlich wirkende Automatisierung auch nach Automatisierungsgrad oder -level unterschieden. Der hier gültige Standard ist die SAE J3016 der SAE-International, einer Standardisierungsorganisation. Hierbei werden die Fahrfunktionen in die Level 0 bis 5 eingeteilt. Die vorgeschlagenen einfachen Begrifflichkeiten (assistierter, automatisierter und autonomer Modus) beschreiben Fahrerrollen.

Die Level nach dem SAE-Standard J3016 sind:
Automatisierungsgrad Level 0: Selbstfahrer ("Driver only"), der Fahrer fährt selbst (lenkt, beschleunigt, bremst etc.);
Automatisierungsgrad Level 1: Assistierter Modus. Bestimmte Assistenzsysteme helfen bei der Fahrzeugbedienung, beispielsweise der Abstandsregeltempomat (ACC);
Automatisierungsgrad Level 2: Assistierter Modus. Teilautomatisierung. Funktionen wie automatisches Einparken, Spurhalten, allgemeine Längsführung, Beschleunigen, Abbremsen werden von den Assistenzsystemen übernommen, z. B. vom Stauassistent;
Automatisierungsgrad Level 3: Automatisierter Modus. Der Fahrer muss das System nicht dauernd überwachen. Das Fahrzeug führt selbstständig Funktionen wie das Auslösen des Blinkers, Spurwechsel und Spurhalten durch. Der Fahrer kann sich anderen Dingen zuwenden, wird aber bei Bedarf innerhalb einer Vorwarnzeit vom System aufgefordert die Führung zu übernehmen. Der Gesetzgeber arbeitet darauf hin, Automatisierungsgrad-3-Fahrzeuge zuzulassen;
Automatisierungsgrad Level 4: Autonomer Modus. Hochautomatisierung. Die Führung des Fahrzeugs wird dauerhaft vom System übernommen. Werden die Fahraufgaben vom System nicht mehr bewältigt, kann der Fahrer aufgefordert werden, die Führung zu übernehmen; Automatisierungsgrad Level 5: Autonomer Modus. Vollautomatisierung. Kein Fahrer erforderlich. Außer dem Festlegen des Ziels und dem Starten des Systems ist kein menschliches Eingreifen erforderlich. Das Fahrzeug kommt ohne Lenkrad und Pedale aus.

Im Rahmen der vorliegenden Erfindung kann sich daher der Begriff insbesondere auf ein Fahrzeug mit einem Automatisierungslevel von 3 und/oder 4 nach dem SAE-Standard J3016 beziehen. Bis einschließlich Level 2 assistieren die Funktionen den Fahrern (Assistierter Modus). Im Level 3 (Automatisierter Modus) automatisieren die Funktionen die Fahraufgabe. Fahrzeuge, deren Systeme Level 3 erfüllen, können zeitweise selbstständig fahren, wobei die Fahrer nach Aufforderung und mit zeitlichem Vorlauf das Steuer wieder übernehmen. Damit gibt die Technik im Level 3 erstmals die Möglichkeit, fahrfremde Tätigkeiten während der Fahrt sicher auszuführen. Die Nutzung dieser technischen Möglichkeit ist mit dem im Jahre 2017 verabschiedeten Gesetz zum automatisierten Fahren in Deutschland auch rechtlich erlaubt. Ab Level 4 (Autonomer Modus) können Fahrzeuge selbstständig fahren, ohne dass die Fahrer übernehmen können müssen - die Funktionen sind also autonom bei der Ausführung der Fahraufgabe. Von "Autonomem Fahren" ist bei einem Automatisierungsgrad ab Level 4 die Rede.

Der Begriff "aktueller Fahrzeugstatus", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen momentanen Zustand des Fahrzeugs beziehen. Insbesondere kann sich der Begriff auf Daten über eine Geschwindigkeit, eine Richtung, eine Position des Fahrzeugs, Grund für eine Übernahmeaufforderung beziehen.

Der Begriff "Verkehrsszenario", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine zeitliche Ablauffolge von hintereinander folgenden einzelnen Verkehrssituationen beziehen.

Der Begriff "Verkehrssituation", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf Daten über eine Umfeld- bzw. Umweltsituation des Fahrzeugs beziehen. Da die Fahrsituation zum Zeitpunkt während eines automatisierten Fahrbetriebs im Rahmen eines Verkehrsszenarios erfasst wird, handelt es sich um aktuelle Fahrsituationen. Insbesondere kann sich der Begriff auf Straßenname, Straßenart, aktuelle Fahrspur, aktuelle Fahrrichtung, aktuelle Geschwindigkeit, aktuell gültige Verkehrsbeschränkung, aktueller Umgebungszustand von Sicht, aktueller Umgebungszustand der Straße, Typen der umgebenden Fahrzeuge, Positionen der umgebenden Fahrzeuge, Zustand der umgebenden Fahrzeuge, Gegenverkehr, (Relativ-) Geschwindigkeiten der umgebenden Fahrzeuge, Wettersituation, Fahrbahnzustand und Fahrtziel beziehen.

Der Begriff "Übermittlungsvorrichtung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Vorrichtung beziehen, die zum Übermitteln von Informationen ausgebildet ist. Die Übermittlung erfolgt dabei durch Ausgabe und/oder Wiedergabe der Informationen.

Der Begriff "multimodal", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf die Ausgabe und/oder Wiedergabe von Informationen durch mindestens zwei verschiedene Kommunikationsmethoden beziehen. Der Begriff kann sich insbesondere auf Kommunikationsmethoden in Form von taktilen, textlichen, auditiven, sprachlichen, räumlichen und visuellen Ressourcen bzw. Modalitäten beziehen, die zum Erstellen von Nachrichten genutzt werden. Im Rahmen der vorliegenden Erfindung umfasst der Begriff "multimodal" zumindest eine visuelle und eine weitere Form der Kommunikation, die bevorzugt eine akustische Form der Kommunikation ist.

Der Begriff "Information", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf Wissen beziehen, das ein Absender einem Empfänger über einen Informationskanal vermittelt. Die Information kann dabei die Form von Signalen oder Code annehmen. Der Informationskanal ist in vielen Fällen ein Medium. Beim Empfänger führt die Information zu einem Zuwachs an Wissen. Information kann auch synonym für Nachricht, Auskunft, Belehrung, Aufklärung verwendet werden. In jedem Fall wird im Rahmen der vorliegenden Erfindung mit der Information eine Aussage übermittelt. Insbesondere wird mit der Information eine Aussage zu einem aktuellen Fahrzeugstatus und ein Verkehrsszenario übermittelt. Somit unterscheidet sich eine Information von einer Frage, da bei letzterer keine Aussage übermittelt wird, sondern der Empfänger der Frage gezwungen wird, sich die Information und somit das Wissen zur Beantwortung der Frage erst anzueignen.

Der Begriff "Abgleichvorrichtung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Vorrichtung beziehen, die zum Abgleichen einer Wahrnehmung des Fahrers von den übermittelten Informationen mit den übermittelten Informationen ausgebildet ist. Insbesondere kann sich der Begriff auf eine Vorrichtung beziehen, die zum Vergleichen eines kognitiven Zustands der Fahrzeugsensorik mit einem kognitiven Zustand des Fahrers ausgebildet ist. Dabei kann die Vorrichtung zum insbesondere zum Durchführen eines interaktiv geführten Systemabgleichs zweier Kognitionszustände, nämlich von Mensch und Fahrzeug, ausgebildet sein. Hierbei sollen die vom Menschen mit seinen Augen beobachteten Wahrnehmungen mit dem von der Sensorik erkannten Verkehrszustand rund um das eigene Fahrzeug des Fahrers in Übereinstimmung gebracht werden.

Der Begriff "Abgleichen", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Prozess beziehen, bei dem Daten, insbesondere Informationen, miteinander verglichen werden, um Diskrepanzen aufzuspüren. Der Begriff kann sich insbesondere auf ein Vergleichen der Wahrnehmung eines Fahrers von Informationen, die an diesen übermittelt werden, mit den übermittelten Informationen beziehen, um festzustellen ob es eine Diskrepanz bzw. Abweichung zwischen Wahrnehmung und den übermittelten Informationen gibt. Das Überprüfen der Wahrnehmung erfolgt bevorzugt durch Abfragen und Antworten des Fahrers. Das Abfragen und Antworten ist dabei nicht auf eine verbale Kommunikation beschränkt, sondern kann auch durch visuelle, taktile oder beliebige andere Kommunikationsweise erfolgen. Bei einer vorteilhaften Ausgestaltung kann sich der Begriff weiterhin auf einen Prozess beziehen, bei dem die Wahrnehmung und die übermittelten Informationen in Übereinstimmung gebracht werden, falls eine Diskrepanz bzw. Abweichung zwischen Wahrnehmung und übermittelten Informationen festgestellt wird. Dies kann durch ein Wiederholen der übermittelten Informationen und/oder Übermitteln von neuen, abweichenden Informationen erfolgen solange, bis keine Abweichung festgestellt wird.

Der Begriff "Checkliste", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Form eines Fragenkatalogs oder einer Prüfliste mit dem Ziel beziehen, durch die Befragung von Personen den Istzustand einer Situation zu ermitteln. Im Rahmen der vorliegenden Erfindung handelt es sich bei dem Istzustand der Situation insbesondere um die Wahrnehmung der an den Fahrer übermittelten Informationen. Ein Prüfkatalog in Form einer Checkliste kann aber auch analog zu einer Anleitung für eine noch nicht- oder schon lange nicht mehr ausgeführte Tätigkeit verwandt werden. Die Checkliste hilft dann alle wichtigen Punkte nacheinander abzuarbeiten, um am Schluss das erwünschte Ergebnis zu erreichen. Die Checkliste ist dabei eine bestimmte Form der Prüfliste. Sie zielt in der Regel allerdings im Gegensatz zur Prüfliste weniger auf eine Ermittlung qualitativer Defizite (Validierung) als vielmehr auf eine Art Vollständigkeitskontrolle (Verifizierung) ab. Checklisten werden besonders dort verwendet, wo das Vergessen einzelner Arbeitsschritte gravierende Konsequenzen haben kann, wie etwa bei Fahrern von Kraftfahrzeugen oder Piloten.

Der Begriff "computerimplementiertes Verfahren", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Implementierung eines Verfahrens beziehen, die einen Computer, ein Computernetz oder eine sonstige programmierbare Vorrichtung umfasst und bei der mindestens ein Schritt des Verfahrens ganz oder teilweise mit einem Computerprogramm realisiert wird

Der Begriff "Computer", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Gerät beziehen, das mittels programmierbarer Rechenvorschriften Daten verarbeitet. Ein Computer umfasst zumindest fünf Hauptkomponenten: das Rechenwerk (im Wesentlichen die arithmetisch-logische Einheit (ALU)), das Steuerwerk, die Buseinheit, das Speicherwerk sowie das (die) Eingabe-/Ausgabewerk(e). In den heutigen Computern sind die ALU und die Steuereinheit meistens zu einem Baustein verschmolzen, der so genannten CPU (Central Processing Unit, zentraler Prozessor).

Der Begriff "Prozessor", wie er hier verwendet wird, ist ebenfalls ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen grundsätzlich beliebigen logischen Schaltkreis beziehen, welche eingerichtet ist, um grundlegende Operationen eines Computers oder Systems durchzuführen, und/oder, auf eine Vorrichtung, welche eingerichtet ist, um Rechnungen oder logische Operationen durchzuführen. Insbesondere kann der Prozessor eingerichtet sein, um grundlegende Instruktionen umzusetzen, welche einen Computer oder ein Computersystem steuern. Beispielsweise kann der Prozessor mindestens eine Komponente aufweisen, ausgewählt aus der Gruppe bestehend aus: einer arithmetischen logischen Einheit (arithmetic logic unit, ALU); eine Fließkomma-Einheit (floating-point unit, FPU), wie beispielsweise einen mathematischen Coprozessor oder einen numerischen Coprozessor; eine Mehrzahl an Registern, insbesondere Register, welche eingerichtet sind, um Operanden an die ALU zu liefern und um Resultate von Operationen zu speichern; einen Speicher, insbesondere einen Datenspeicher, wie beispielsweise einen L1 und/oder L2 Cache-Datenspeicher. Insbesondere kann der Prozessor einen einzelnen Kern aufweisen oder auch mehrere Kerne. Insbesondere kann der Prozessor eine zentrale Prozessoreinheit (central processing unit, CPU) sein oder eine derartige zentrale Prozessoreinheit umfassen. Zusätzlich oder alternativ kann der Prozessor ein Mikroprozessor sein oder einen Mikroprozessor umfassen, so dass, insbesondere, die Komponenten des Prozessors in einem einzelnen integrierten Schaltkreis-Chip umfasst sein können. Alternativ oder zusätzlich kann der Prozessor jedoch auch einen oder mehrere anwendungsspezifische integrierte Schaltkreise (application-specific integrated circuits, ASICs) und/oder ein oder mehrere Feld-programmierbare Gate Arrays (field-programmable gate arrays, FPGAs) oder ähnliche Komponenten umfassen. Der Prozessor kann insbesondere eingerichtet sein, insbesondere durch Software Programmierung, um eine oder mehrere Auswertungsoperationen durchzuführen.

Ferner wird im Rahmen der vorliegenden Erfindung ein Computerprogramm vorgeschlagen, das bei Ablauf auf einem Computer oder Computer-Netzwerk das erfindungsgemäße Verfahren in einer seiner Ausgestaltungen ausführt.

Weiterhin wird im Rahmen der vorliegenden Erfindung ein Computerprogramm mit Programmcode-Mitteln vorgeschlagen, um das erfindungsgemäße Verfahren in einer seiner Ausgestaltungen durchzuführen, wenn das Programm auf einem Computer oder Computer-Netzwerk ausgeführt wird. Insbesondere können die Programmcode-Mittel auf einem computerlesbaren Datenträger und/oder einem computerlesbaren Speichermedium gespeichert sein.

Der Begriffe "computerlesbarer Datenträger" und "computerlesbares Speichermedium", wie sie hier verwendet werden, können sich insbesondere auf nicht-transitorische Datenspeicher beziehen, beispielsweise ein Hardware-Datenspeichermedium, auf welchem computer-ausführbare Instruktionen gespeichert sind. Der computerlesbare Datenträger oder das computerlesbare Speichermedium können insbesondere ein Speichermedium wie ein Random-Access Memory (RAM) und/oder ein Read-Only Memory (ROM) sein oder umfassen.

Außerdem wird im Rahmen der vorliegenden Erfindung ein Datenträger vorgeschlagen, auf dem eine Datenstruktur gespeichert ist, die nach einem Laden in einen Arbeits- und/oder Hauptspeicher eines Computers oder Computer-Netzwerkes das erfindungsgemäße Verfahren in einer seiner Ausgestaltungen ausführen kann.

Auch wird im Rahmen der vorliegenden Erfindung ein Computerprogramm-Produkt mit auf einem maschinenlesbaren Träger gespeicherten Programmcode-Mitteln vorgeschlagen, um das erfindungsgemäße Verfahren in einer seiner Ausgestaltungen durchzuführen, wenn das Programm auf einem Computer oder Computer-Netzwerk ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Schließlich wird im Rahmen der vorliegenden Erfindung ein moduliertes Datensignal vorgeschlagen, welches von einem Computersystem oder Computernetzwerk ausführbare Instruktionen zum Ausführen eines Verfahrens nach einer der beschriebenen Ausführungsformen enthält.

Im Hinblick auf die computer-implementierten Aspekte der Erfindung können einer, mehrere oder sogar alle Verfahrensschritte des Verfahrens gemäß einer oder mehreren der hier vorgeschlagenen Ausgestaltungen mittels eines Computers oder Computer-Netzwerks durchgeführt werden. Somit können, allgemein, jegliche der Verfahrensschritte, einschließlich der Bereitstellung und/oder Manipulation von Daten mittels eines Computers oder Computer-Netzwerks durchgeführt werden. Allgemein können diese Schritte jegliche der Verfahrensschritte umfassen, ausgenommen der Schritte, welche manuelle Arbeit erfordern, beispielsweise das Bereitstellen von Proben und/oder bestimmte Aspekte der Durchführung tatsächlicher Messungen.

Zusammenfassend werden, ohne Beschränkung weiterer möglicher Ausgestaltungen, folgende Ausführungsformen vorgeschlagen:
Ausführungsform 1: Fahrassistenzsystem für ein automatisiert fahrbares Fahrzeug, umfassend
   mehrere Sensoren zum Erfassen von Informationen über einen aktuellen Fahrzeugstatus und ein Verkehrsszenario während eines automatisierten Fahrzustand des Fahrzeugs,
   mindestens eine Übermittlungsvorrichtung zum multimodalen Übermitteln der Informationen an den Fahrer, und
   eine Abgleichvorrichtung zum Abgleichen der übermittelten Informationen und einer Wahrnehmung des Fahrers von den übermittelten Informationen, wobei die Informationen mindestens eine Information sind ausgewählt aus der Gruppe bestehend aus: Grund für eine Übernahmeanforderung, Straßenname, Straßenart, aktuelle Fahrspur, aktuelle Fahrrichtung, aktuelle Geschwindigkeit, aktuell gültige Verkehrsbeschränkung, aktueller Umgebungszustand von Sicht, aktueller Umgebungszustand der Straße, Typen der umgebenden Fahrzeuge, Positionen der umgebenden Fahrzeuge, Zustand der umgebenden Fahrzeuge, Gegenverkehr, Geschwindigkeiten der umgebenden Fahrzeuge, Wettersituation, Fahrbahnzustand und Fahrtziel..
Ausführungsform 2: Fahrassistenzsystem nach der vorhergehenden Ausführungsform, wobei die Informationen mehrere Informationen sind ausgewählt aus der Gruppe bestehend aus: Grund für eine Übernahmeanforderung, Straßenname, Straßenart, aktuelle Fahrspur, aktuelle Fahrrichtung, aktuelle Geschwindigkeit, aktuell gültige Verkehrsbeschränkung, aktueller Umgebungszustand von Sicht, aktueller Umgebungszustand der Straße, Typen der umgebenden Fahrzeuge, Positionen der umgebenden Fahrzeuge, Zustand der umgebenden Fahrzeuge, Gegenverkehr, Geschwindigkeiten der umgebenden Fahrzeuge, Wettersituation, Fahrbahnzustand und Fahrtziel.
Ausführungsform 3: Fahrassistenzsystem nach einer der vorhergehenden Ausführungsformen, wobei die Sensoren eine Kamera, einen GPS-Sensor, einen LIDAR-Sensor, einen Ultraschall-Sensor, einen Radar-Sensor, einen Geschwindigkeitssensor, einen Kompass und/oder ein Gyroskop umfassen.
Ausführungsform 4: Fahrassistenzsystem nach einer der vorhergehenden Ausführungsformen, wobei die Übermittlungsvorrichtung mindestens eine visuelle Ausgabevorrichtung zum visuellen Übermitteln der Informationen an den Fahrer und eine weitere Ausgabevorrichtung zum Übermitteln der Informationen an den Fahrer in einer von visuell verschiedenen Form, insbesondere eine akustische Ausgabevorrichtung zum akustischen Übermitteln der Informationen an den Fahrer, umfasst.
Ausführungsform 5: Fahrassistenzsystem nach der vorhergehenden Ausführungsform, wobei die visuelle Ausgabevorrichtung zum Darstellen der übermittelten Informationen als Checkliste ausgebildet ist.
Ausführungsform 6: Fahrassistenzsystem nach einer der beiden vorhergehenden Ausführungsformen, wobei die visuelle Ausgabevorrichtung zum Variieren einer Darstellung der übermittelten Informationen ausgebildet ist.
Ausführungsform 7: Fahrassistenzsystem nach der vorhergehenden Ausführungsform, wobei die visuelle Ausgabevorrichtung zum Gewichten der Darstellung der übermittelten Informationen ausgebildet ist.
Ausführungsform 8: Fahrassistenzsystem nach der vorhergehenden Ausführungsform, wobei die visuelle Ausgabevorrichtung zum Anpassen einer Reihenfolge der Darstellung der übermittelten Informationen an eine Geschwindigkeit einer Veränderung der erfassten Informationen über den aktuellen Fahrzeugstatus und das Verkehrsszenario ausgebildet ist.
Ausführungsform 9: Fahrassistenzsystem nach einer der vorhergehenden Ausführungsformen, wobei die Abgleichvorrichtung eine Eingabevorrichtung zum Eingeben der Wahrnehmung des Fahrers aufweist.
Ausführungsform 10: Fahrassistenzsystem nach der vorhergehenden Ausführungsform, wobei die Eingabevorrichtung zum manuellen Eingeben der Wahrnehmung des Fahrers ausgebildet ist.
Ausführungsform 11: Fahrassistenzsystem nach einer der beiden vorhergehenden Ausführungsformen, wobei die Eingabevorrichtung zum optischen Eingeben der Wahrnehmung des Fahrers ausgebildet ist.
Ausführungsform 12: Fahrassistenzsystem nach der vorhergehenden Ausführungsform, wobei die Eingabevorrichtung eine Blickerfassungsvorrichtung aufweist oder als Blickerfassungsvorrichtung ausgebildet ist.
Ausführungsform 13: Fahrassistenzsystem nach einer der Ausführungsformen 9 bis 12, wobei die Eingabevorrichtung zum akustischen Eingeben der Wahrnehmung des Fahrers ausgebildet ist.
Ausführungsform 14: Fahrassistenzsystem nach einer der vorhergehenden Ausführungsformen, wobei die Übermittlungsvorrichtung zum Wiederholen der Übermittlung der Informationen ausgebildet ist, falls die Abgleichvorrichtung eine Abweichung der Wahrnehmung von den übermittelten Informationen feststellt.
Ausführungsform 15: Fahrassistenzsystem nach einer der vorhergehenden Ausführungsformen, weiterhin umfassend eine Freigabevorrichtung, wobei die Freigabevorrichtung zum Freigeben eines Übergangs von dem automatisierten Fahrzustand des Fahrzeugs in einen manuellen Fahrzustand des Fahrzeugs ausgebildet ist, falls die Abgleichvorrichtung eine Übereinstimmung der Wahrnehmung mit den übermittelten Informationen feststellt.
Ausführungsform 16: Fahrassistenzsystem nach einer der vorhergehenden Ausführungsformen, weiterhin umfassend eine Speichervorrichtung, die zum Speichern der von den Sensoren erfassten Informationen, der von der Übermittlungsvorrichtung übermittelten Informationen und der Wahrnehmung des Fahrers ausgebildet ist.
Ausführungsform 17: Computerimplementiertes Verfahren zum Assistieren eines Fahrers eines automatisiert fahrbaren Fahrzeugs, umfassend
   - Erfassen von Informationen über einen aktuellen Fahrzeugstatus und ein Verkehrsszenario während eines automatisierten Fahrzustand des Fahrzeugs,
   - multimodales Übermitteln der Informationen an den Fahrer, und
   - Abgleichen der übermittelten Informationen und einer Wahrnehmung des Fahrers von den übermittelten Informationen, wobei die Informationen mindestens eine Information sind ausgewählt aus der Gruppe bestehend aus: Grund für eine Übernahmeanforderung, Straßenname, Straßenart, aktuelle Fahrspur, aktuelle Fahrrichtung, aktuelle Geschwindigkeit, aktuell gültige Verkehrsbeschränkung, aktueller Umgebungszustand von Sicht, aktueller Umgebungszustand der Straße, Typen der umgebenden Fahrzeuge, Positionen der umgebenden Fahrzeuge, Zustand der umgebenden Fahrzeuge, Gegenverkehr, Geschwindigkeiten der umgebenden Fahrzeuge, Wettersituation, Fahrbahnzustand und Fahrtziel..
Ausführungsform 18: Verfahren nach der vorhergehenden Ausführungsform, wobei die Informationen mehrere Informationen sind ausgewählt aus der Gruppe bestehend aus: Grund für eine Übernahmeanforderung, Straßenname, Straßenart, aktuelle Fahrspur, aktuelle Fahrrichtung, aktuelle Geschwindigkeit, aktuell gültige Verkehrsbeschränkung, aktueller Umgebungszustand von Sicht, aktueller Umgebungszustand der Straße, Typen der umgebenden Fahrzeuge, Positionen der umgebenden Fahrzeuge, Zustand der umgebenden Fahrzeuge, Gegenverkehr, Geschwindigkeiten der umgebenden Fahrzeuge, Wettersituation, Fahrbahnzustand und Fahrtziel.
Ausführungsform 19: Verfahren nach einer der Ausführungsformen 17 bis 18, wobei die Sensoren eine Kamera, einen GPS-Sensor, einen LIDAR-Sensor, einen Ultraschall-Sensor, einen Radar-Sensor, einen Geschwindigkeitssensor, einen Kompass und/oder ein Gyroskop umfassen.
Ausführungsform 20: Verfahren nach einer der Ausführungsformen 17 bis 19, weiterhin umfassend zumindest visuelles Übermitteln der Informationen an den Fahrer und Übermitteln der Informationen an den Fahrer in einer von visuell verschiedenen Form, insbesondere akustisches Übermitteln der Informationen an den Fahrer.
Ausführungsform 21: Verfahren nach der vorhergehenden Ausführungsform, weiterhin umfassend Darstellen der übermittelten Informationen als Checkliste.
Ausführungsform 22: Verfahren nach einer der beiden vorhergehenden Ausführungsformen, weiterhin umfassend Variieren einer Darstellung der übermittelten Informationen.
Ausführungsform 23: Verfahren nach der vorhergehenden Ausführungsform, weiterhin umfassend Gewichten der Darstellung der übermittelten Informationen.
Ausführungsform 24: Verfahren nach der vorhergehenden Ausführungsform, weiterhin umfassend Anpassen einer Reihenfolge der Darstellung der übermittelten Informationen an eine Geschwindigkeit einer Veränderung der erfassten Informationen über den aktuellen Fahrzeugstatus und das Verkehrsszenario.
Ausführungsform 25: Verfahren nach einer der Ausführungsformen 17 bis 24, weiterhin umfassend Eingeben der Wahrnehmung des Fahrers.
Ausführungsform 26: Verfahren nach der vorhergehenden Ausführungsform, weiterhin umfassend manuelles Eingeben der Wahrnehmung des Fahrers.
Ausführungsform 27: Verfahren nach einer der beiden vorhergehenden Ausführungsformen, weiterhin umfassend optisches Eingeben der Wahrnehmung des Fahrers.
Ausführungsform 28: Verfahren nach einer der Ausführungsformen 17 bis 27, weiterhin umfassend akustisches Eingeben der Wahrnehmung des Fahrers.
Ausführungsform 29: Verfahren nach einer der Ausführungsformen 17 bis 28, weiterhin umfassend Wiederholen der Übermittlung der Informationen, falls eine Abweichung der Wahrnehmung von den übermittelten Informationen festgestellt wird.
Ausführungsform 30: Verfahren nach einer der Ausführungsformen 17 bis 29, weiterhin umfassend Freigeben eines Übergangs von dem automatisierten Fahrzustand des Fahrzeugs in einen manuellen Fahrzustand des Fahrzeugs, falls eine Übereinstimmung der Wahrnehmung mit den übermittelten Informationen festgestellt wird.
Ausführungsform 31: Verfahren nach einer der Ausführungsformen 17 bis 30, weiterhin umfassend Speichern der erfassten Informationen, der übermittelten Informationen und der Wahrnehmung des Fahrers.
Ausführungsform 32: Computerprogramm, das dazu eingerichtet ist, bei Ablauf auf einem Computer oder Computer-Netzwerk das Verfahren nach einer der Ausführungsformen 16 bis 31 auszuführen.

### Kurze Beschreibung der Figuren

Weitere Einzelheiten und Merkmale ergeben sich aus der nachfolgenden Beschreibung von Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figur 1: eine schematische Darstellung eines Fahrassistenzsystems gemäß der vorliegenden Erfindung;
- Figur 2: eine schematische Darstellung eines ersten Regelkreises in einem automatisiert fahrbaren Fahrzeug;
- Figur 3: eine schematische Darstellung eines zweiten Regelkreises in einem automatisiert fahrbaren Fahrzeug;
- Figur 4: eine schematische Darstellung eines dritten Regelkreises in einem automatisiert fahrbaren Fahrzeug; und
- Figur 5: ein Ablaufdiagramm eines erfindungsgemäßen Verfahren zum Assistieren eines Fahrers eines automatisiert fahrbaren Fahrzeugs.

### Beschreibung der Ausführungsbeispiele

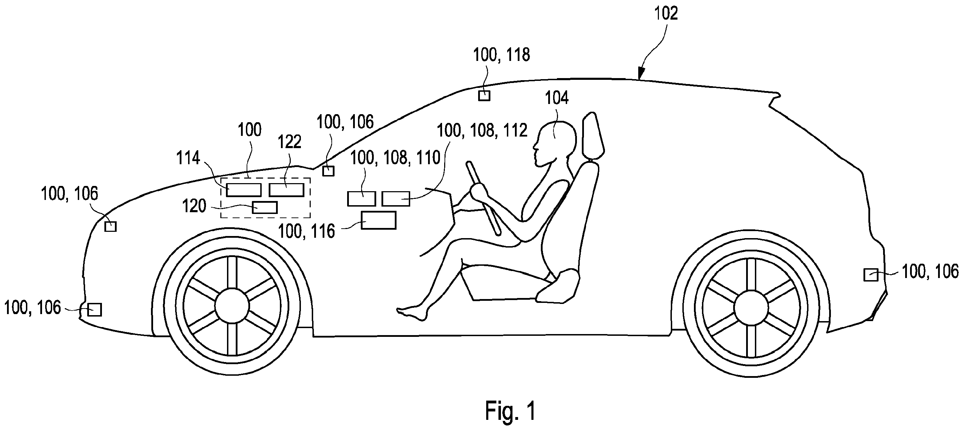

Figur 1 zeigt eine schematische Darstellung eines Fahrassistenzsystems 100 gemäß der vorliegenden Erfindung. Das Fahrassistenzsystem 100 kann in einem automatisiert fahrbaren Fahrzeug 102 installiert sein. Beispielsweise ist das Fahrassistenzsystem 100 in einer Steuerung des Fahrzeugs 102 implementiert. Insbesondere ist das Fahrassistenzsystem 100 eingerichtet, einen Fahrer 104 des Fahrzeugs 102 während einer Übernahmeaufforderung bzw. Übernahmevorgangs zu assistieren. Das Fahrassistenzsystem 100 weist mehrere Sensoren 106 auf, die sich voneinander unterscheiden. Die Sensoren 106 sind zum Erfassen von Informationen über einen aktuellen Fahrzeugstatus und ein Verkehrsszenario während eines automatisierten Fahrzustand des Fahrzeugs 102 ausgebildet. Die Sensoren 106 umfassen eine Kamera, einen GPS-Sensor, einen LIDAR-Sensor, einen Ultraschall-Sensor, einen Radar-Sensor, einen Geschwindigkeitssensor, einen Kompass und/oder ein Gyroskop. Die Informationen sind mindestens eine Information und bevorzugt mehrere Informationen ausgewählt aus der Gruppe bestehend aus: Grund für eine Übernahmeanforderung, Straßenname, Straßenart, aktuelle Fahrspur, aktuelle Fahrrichtung, aktuelle Geschwindigkeit, aktuell gültige Verkehrsbeschränkung, aktueller Umgebungszustand von Sicht, aktueller Umgebungszustand der Straße, Typen der umgebenden Fahrzeuge, Positionen der umgebenden Fahrzeuge, Zustand der umgebenden Fahrzeuge, Gegenverkehr, Geschwindigkeiten der umgebenden Fahrzeuge, Wettersituation, Fahrbahnzustand und Fahrtziel.

Das Fahrassistenzsystem 100 weist weiterhin mindestens eine Übermittlungsvorrichtung 108 auf. Die Übermittlungsvorrichtung 108 ist zum multimodalen Übermitteln der Informationen an einen Fahrer 104 des Fahrzeugs 102 ausgebildet. Die Übermittlungsvorrichtung 108 umfasst bei der gezeigten Ausführungsform mindestens eine akustische Ausgabevorrichtung 110 zum akustischen Übermitteln der Informationen an den Fahrer 104. Alternativ oder zusätzlich kann die Übermittlungsvorrichtung jedoch eine weitere Übermittlungsvorrichtung 108 zum Übermitteln der Informationen an den Fahrer 104 in einer von visuell verschiedenen Form aufweisen, wie beispielsweise zum taktilen Übermitteln der Informationen an dem Fahrer 104. In jedem Fall umfasst die Übermittlungsvorrichtung 110 weiterhin mindestens eine visuelle Ausgabevorrichtung 112 zum visuellen Übermitteln der Informationen an den Fahrer 104. Die visuelle Ausgabevorrichtung 112 ist zum Darstellen der übermittelten Informationen als Checkliste ausgebildet. Die visuelle Ausgabevorrichtung 112 ist zum Variieren einer Darstellung der übermittelten Informationen ausgebildet. Das Variieren betrifft dabei die Reihenfolge der dargestellten Informationen als auch die Position oder den Ort, an der bzw. an dem die Informationen dargestellt werden. Die visuelle Ausgabevorrichtung 112 ist weiterhin zum Gewichten der Darstellung der übermittelten Informationen ausgebildet. Insbesondere ist die visuelle Ausgabevorrichtung 112 zum Anpassen einer Reihenfolge der Darstellung der übermittelten Informationen an eine Geschwindigkeit einer Veränderung der erfassten Informationen über den aktuellen Fahrzeugstatus und das Verkehrsszenario ausgebildet.

Das Fahrassistenzsystem 100 weist weiterhin eine Abgleichvorrichtung 114 auf. Die Abgleichvorrichtung 114 ist zum Abgleichen der übermittelten Informationen und einer Wahrnehmung des Fahrers 104 von den übermittelten Informationen ausgebildet. Die Abgleichvorrichtung 114 weist eine Eingabevorrichtung 116 zum Eingeben der Wahrnehmung des Fahrers 104 auf. Die Eingabevorrichtung 116 ist zum manuellen Eingeben der Wahrnehmung des Fahrers 104 ausgebildet. Beispielsweise ist die Eingabevorrichtung als Touchscreen ausgebildet. Alternativ oder zusätzlich ist die Eingabevorrichtung 116 zum optischen Eingeben der Wahrnehmung des Fahrers 104 ausgebildet. Beispielsweise weist die Eingabevorrichtung 116 eine Blickerfassungsvorrichtung 118 auf oder ist als Blickerfassungsvorrichtung 118 ausgebildet. Eine solche Blickerfassungsvorrichtung 118 ist beispielsweise als Eye Tracking System bekannt. Alternativ oder zusätzlich ist die Eingabevorrichtung 116 zum akustischen Eingeben der Wahrnehmung des Fahrers 104 ausgebildet. Beispielsweise weist die Eingabevorrichtung 116 ein Mikrofon oder dergleichen auf. Die Übermittlungsvorrichtung 108 ist ausgebildet zum Wiederholen der Übermittlung der Informationen, falls die Abgleichvorrichtung 114 eine Abweichung der Wahrnehmung von den übermittelten Informationen feststellt.

Das Fahrassistenzsystem 100 weist weiterhin eine Freigabevorrichtung 120 auf. Die Freigabevorrichtung 120 ist ausgebildet zum Freigeben eines Übergangs von dem automatisierten Fahrzustand des Fahrzeugs 102 in einen manuellen Fahrzustand des Fahrzeugs 102, falls die Abgleichvorrichtung 114 eine Übereinstimmung der Wahrnehmung mit den übermittelten Informationen feststellt.

Das Fahrassistenzsystem 100 weist weiterhin eine optionale Speichervorrichtung 122 auf. Die Speichervorrichtung 122 ist ausgebildet zum Speichern der von den Sensoren 106 erfassten Informationen, der von der Übermittlungsvorrichtung 108 übermittelten Informationen und der Wahrnehmung des Fahrers 104. Beispielsweise ist die Speichervorrichtung 122 Teil eines Fahrdatenschreibers des Fahrzeugs 102.

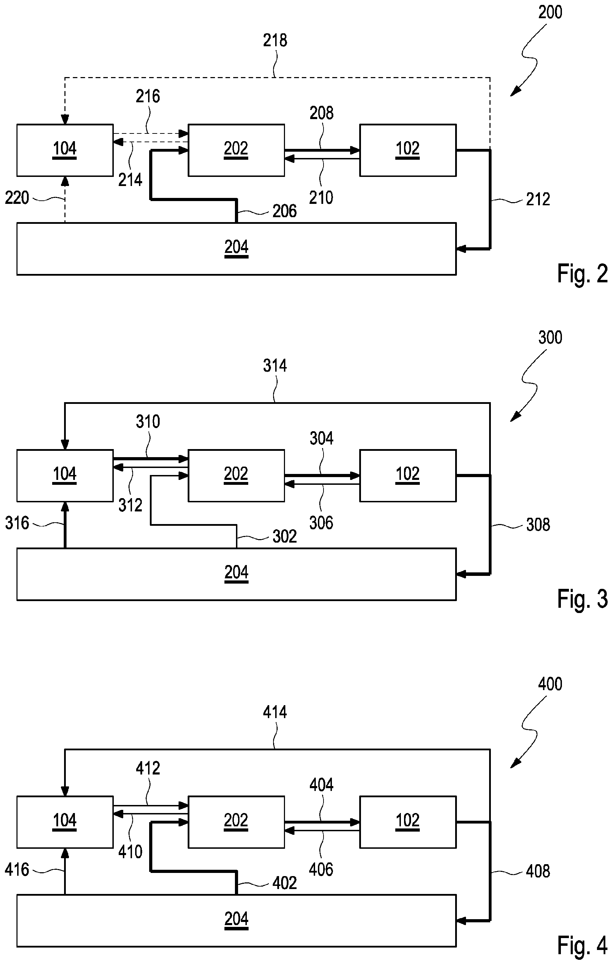

Figur 2 zeigt eine schematische Darstellung eines ersten Regelkreises 200 in einem automatisiert fahrbaren Fahrzeug 102 während eines automatisierten Fahrzustands des Fahrzeugs 102, wie es beispielsweise unter Bezugnahme auf Figur 1 beschrieben ist. Der erste Regelkreis umfasst als Komponenten das Fahrzeug 102, eine automatisierte Fahrfunktion 202, den Fahrer 104 und eine Umgebung 204 des Fahrzeugs 102. Mittels der oben genannten Sensoren 106 erfasste Daten oder Informationen aus der Umgebung 204 werden der automatisierten Fahrfunktion 202 als Eingangsgrößen zugeführt, wie durch einen durchgezogenen dicken Pfeil 206 angedeutet ist. Die automatisierte Fahrfunktion 202 wiederum verarbeitet diese Daten und Informationen und steuert das Fahrzeug 102 entsprechend, wie durch einen durchgezogenen dicken Pfeil 208 angedeutet ist. Weiterhin gibt es eine Daten- oder Informationsübermittlung vom Fahrzeug 102 zur automatisierten Fahrfunktion 202, wie beispielsweise in Form einer Rückmeldung oder Rückkoppelung, wie durch einen durchgezogenen dünnen Pfeil 210 angedeutet ist. Das Fahrzeug 102 wiederum beeinflusst die Umgebung 204, wie durch einen durchgezogenen dicken Pfeil 212 angedeutet ist.

Weiterhin gibt es, wenn auch nicht aktiv, die Möglichkeit der Interaktion zwischen der automatisierten Fahrfunktion 202 und dem Fahrer 104, wie durch einen gestrichelten dünnen Pfeil 214 angedeutet ist, und umgekehrt, wie durch einen gestrichelten dünnen Pfeil 216 angedeutet ist. Auch das Fahrzeug 102 beeinflusst zumindest theoretisch, wenn auch nicht aktiv, durch seinen Status und Verhalten den Fahrer 104, wie durch einen gestrichelten dünnen Pfeil 218 angedeutet ist. Außerdem beeinflusst die Umgebung 204, wenn auch nicht aktiv, zumindest theoretisch den Fahrer 104, der gegebenenfalls darauf reagiert, wie durch einen gestrichelten dünnen Pfeil 220 angedeutet ist.

Figur 3 zeigt eine schematische Darstellung eines zweiten Regelkreises 300 in einem automatisiert fahrbaren Fahrzeug 102 während eines manuellen Fahrzustands des Fahrzeugs 102, wie es beispielsweise unter Bezugnahme auf Figur 1 beschrieben ist. Nachstehend werden lediglich die Unterschiede zu dem ersten Regelkreis 200 beschrieben und gleiche oder vergleichbare Merkmale sind mit gleichen Bezugszeichen versehen. Mittels der oben genannten Sensoren 106 erfasste Daten oder Informationen aus der Umgebung 204 werden der automatisierten Fahrfunktion 202 als Eingangsgrößen zugeführt, wie durch einen durchgezogenen dünnen Pfeil 302 angedeutet ist. Die automatisierte Fahrfunktion 202 wiederum verarbeitet diese Daten und Informationen im Hintergrund. Der Fahrer 104 steuert das Fahrzeug 102 unter Assistenz der automatisierten Fahrfunktion 202, wie durch einen durchgezogenen dicken Pfeil 304 angedeutet ist. Weiterhin gibt es eine Daten- oder Informationsübermittlung vom Fahrzeug 102 zur automatisierten Fahrfunktion 202, wie beispielsweise in Form einer Rückmeldung oder Rückkoppelung, wie durch einen durchgezogenen dünnen Pfeil 306 angedeutet ist. Das Fahrzeug 102 wiederum beeinflusst die Umgebung 204, wie durch einen durchgezogenen dicken Pfeil 308 angedeutet ist.

Weiterhin übt der Fahrer 104 Einfluss auf die automatisierte Fahrfunktion 202 aus, um das Fahrzeug zu steuern, wie durch einen gestrichelten dicken Pfeil 310 angedeutet ist. Weiterhin gibt es, wenn auch nicht aktiv, die Möglichkeit der Interaktion zwischen der automatisierten Fahrfunktion 202 und dem Fahrer 104, wie durch einen gestrichelten dünnen Pfeil 312 angedeutet ist. Auch das Fahrzeug 102 beeinflusst zumindest theoretisch, wenn auch nicht aktiv, durch seinen Status und Verhalten den Fahrer 104, wie durch einen gestrichelten dünnen Pfeil 314 angedeutet ist. Außerdem beeinflusst die Umgebung 204 den Fahrer 104, der darauf reagiert, wie durch einen gestrichelten dünnen Pfeil 316 angedeutet ist.

Figur 4 zeigt eine schematische Darstellung eines dritten Regelkreises 400 in einem automatisiert fahrbaren Fahrzeug 102, wie es beispielsweise unter Bezugnahme auf Figur 1 beschrieben ist, während einer Übernahmeaufforderung an den Fahrer 104, d.h. bei einem Übergang der Verantwortung vom Fahrzeug 102 während eines automatisierten Fahrens auf den Fahrer 104 während des manuellen Fahrens. Der dritte Regelkreis 400 ist der Ansatzpunkt des erfindungsgemäßen Fahrassistenzsystems 100 bzw. Verfahrens. Nachstehend werden lediglich die Unterschiede zu dem ersten Regelkreis 200 beschrieben und gleiche oder vergleichbare Merkmale sind mit gleichen Bezugszeichen versehen. Mittels der oben genannten Sensoren 106 erfasste Daten oder Informationen aus der Umgebung werden der automatisierten Fahrfunktion 202 als Eingangsgrößen zugeführt, wie durch einen durchgezogenen dicken Pfeil 402 angedeutet ist. Die automatisierte Fahrfunktion 202 wiederum verarbeitet diese Daten und Informationen und steuert das Fahrzeug 102 entsprechend, wie durch einen durchgezogenen dicken Pfeil 404 angedeutet ist. Weiterhin gibt es eine Daten- oder Informationsübermittlung vom Fahrzeug 102 zur automatisierten Fahrfunktion 202, wie beispielsweise in Form einer Rückmeldung oder Rückkoppelung, wie durch einen durchgezogenen dünnen Pfeil 406 angedeutet ist. Das Fahrzeug 102 wiederum beeinflusst die Umgebung 204, wie durch einen durchgezogenen dicken Pfeil 408 angedeutet ist.

Bei einer Übernahmeaufforderung an den Fahrer 104 gibt es eine Interaktion zwischen der automatisierten Fahrfunktion 202 und dem Fahrer 104, wie durch einen durchgezogenen dicken Pfeil 410 angedeutet ist, und umgekehrt, wie durch einen durchgezogenen dicken Pfeil 412 angedeutet ist. Auch das Fahrzeug 102 beeinflusst die Wahrnehmung des Fahrers 104 durch seinen Status und Verhalten, der durch das erfindungsgemäße Verfahren gezwungen wird darauf zu reagieren, wie durch einen durchgezogenen dicken Pfeil 414 angedeutet ist. Außerdem beeinflusst die Umgebung 204 den Fahrer 104, der durch das erfindungsgemäße Verfahren gezwungen wird darauf zu reagieren, wie durch einen durchgezogenen dicken Pfeil 416 angedeutet ist.

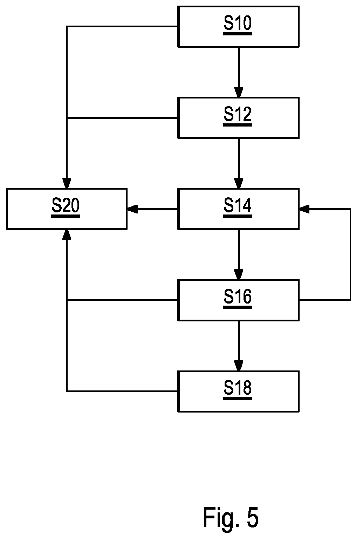

Figur 5 zeigt ein Ablaufdiagramm eines erfindungsgemäßen Verfahren zum Assistieren eines Fahrers 104 eines automatisiert fahrbaren Fahrzeugs 102. Das Verfahren ist computerimplementiert und kann beispielsweise durch einen Computer einer Fahrzeugsteuerung implementiert sein. Das Verfahren erläutert den dritten Regelkreis gemäß Figur 4 näher.

Das Verfahren beginnt mit Schritt S10, der während eines automatisierten Fahrzustand des Fahrzeugs 102 stattfindet. In Schritt S10 werden mittels der oben genannten Sensoren 106 Informationen über einen aktuellen Fahrzeugstatus und ein Verkehrsszenario während des automatisierten Fahrzustand des Fahrzeugs 102 erfasst. Bei derartigen automatisierten Fahrzeugen, die im SAE Level 3 selbständig ohne Zutun des Fahrers 104 gesteuert werden, kann das Fahrzeug jederzeit eine Aufforderung zur Fahrerübernahme, den sogenannten Take Over Request (ToR) auslösen, wie durch Schritt S12 angegeben. Dann ist der menschliche Fahrer 104 aufgefordert, zügig innerhalb eines definierten Zeitraums von ca. 6 bis 20 Sekunden abhängig von der Auslegung des jeweiligen Fahrzeugs 102 die Steuerung des Fahrzeugs 102 wieder vollumfänglich und verantwortlich von der automatisierten Steuerung zu übernehmen.

Daraufhin werden in Schritt S14 die Informationen multimodal an den Fahrer 104 übermittelt, insbesondere mittels der oben beschriebenen Übermittlungsvorrichtung 108. Die Informationen sind mindestens eine Information und bevorzugt mehrere Informationen ausgewählt aus der Gruppe bestehend aus: Grund für eine Übernahmeanforderung, Straßenname, Straßenart, aktuelle Fahrspur, aktuelle Fahrrichtung, aktuelle Geschwindigkeit, aktuell gültige Verkehrsbeschränkung, aktueller Umgebungszustand von Sicht, aktueller Umgebungszustand der Straße, Typen der umgebenden Fahrzeuge, Positionen der umgebenden Fahrzeuge, Zustand der umgebenden Fahrzeuge, Gegenverkehr, Geschwindigkeiten der umgebenden Fahrzeuge, Wettersituation, Fahrbahnzustand und Fahrtziel. Die Informationen werden an den Fahrer 104 zumindest in einer von visuelle verschiedenen Form, wie beispielsweise akustisch, und zusätzlich visuell übermittelt. Bevorzugt werden die übermittelten Informationen als Checkliste dargestellt. Wie nachstehend ausführlicher beschrieben wird, kann eine Darstellung der übermittelten Informationen variieren. Weiterhin kann eine Gewichtung der Darstellung der übermittelten Informationen erfolgen. So kann eine Reihenfolge der Darstellung der übermittelten Informationen an eine Geschwindigkeit einer Veränderung der erfassten Informationen über den aktuellen Fahrzeugstatus und das Verkehrsszenario angepasst werden.

In Schritt S16 erfolgt ein Abgleichen der übermittelten Informationen und einer Wahrnehmung des Fahrers 104 von den übermittelten Informationen. Zu diesem Zweck gibt der Fahrer 104 seine Wahrnehmung ein, insbesondere mittels der Eingabevorrichtung 116. So kann der Fahrer 104 seine Wahrnehmung manuell oder alternativ oder zusätzlich auf anderem Weg eingeben.

Falls in Schritt S16 eine Abweichung der Wahrnehmung von den übermittelten Informationen festgestellt wird, kehrt das Verfahren zu Schritt S14 zurück und erfolgt ein Wiederholen der Übermittlung der Informationen.

Falls in Schritt S16 eine Übereinstimmung der Wahrnehmung mit den übermittelten Informationen festgestellt wird, schreitet das Verfahren zu Schritt S18 fort und es erfolgt ein Freigeben eines Übergangs von dem automatisierten Fahrzustand des Fahrzeugs 102 in einen manuellen Fahrzustand des Fahrzeugs 102.

Beispielsweise soll der Fahrer 104 während die Informationen in Schritt S14 akustisch vermittelt werden, in Schritt S16 auf einem Touchscreen die zugehörigen visuell übermittelten Informationen einzeln mit einer Fingerberührung jeweils nah an der Informationsdarstellung bestätigen, wie beispielsweise die Checkliste abhaken. Diese Form der multimodalen Informationsübermittlung garantiert eine hohe kognitive Erfassung der Informationen, da der Fahrer 104 den Sinn des gesagten erfassen und mit der entsprechend visuell dargebotenen Information in Einklang bringen muss. Dies wird beispielsweise bei der Durchführung von Prozeduren durch Piloten von Luftfahrzeugen ähnlich praktiziert. Es wird also eine Mensch-Maschine-Kommunikation als Erkennungsabfrage durchgeführt, die nur bei ausreichend richtiger Beantwortung zu einem Verantwortungsübergang auf den menschlichen Fahrer 104 erfolgt. Das bedeutet, dass die Abfrage so gestaltet sein muss, dass eine einfache, schnelle und richtige Beantwortung leicht durchführbar ist, wenn der Fahrer 104 sein Umfeld richtig wahrgenommen hat. Dagegen soll eine richtige Beantwortung der Abfrage und damit Freigabe der Fahrerübernahme ohne eine vollständige Erfassung des Verkehrsumfeldes durch "blinde" Beantwortung quasi ausgeschlossen sein.

Der Ansatz, dies in einem Checklistenverfahren durchzuführen, besitzt auch noch einige Herausforderungen an das technische Systemverhalten. Damit eine solche Abfrage nicht zur Routine wird, muss selbstverständlich jede Abfrage durch das Fahrzeug deutlich variieren, weshalb die Darstellung variiert werden kann, wie oben beschrieben wurde. Jede einzelne Verkehrssituation verändert aufgrund der jeweiligen Kritikalität und der Variation der anderen Verkehrsteilnehmer in der Verkehrssituation die Reihenfolge der Abfrage. Sie kann beginnen, den Fahrer 104 die relativ unkritischen und sich wenig verändernden Elemente abzufragen, und fortschreitend potentiell gefährlichere Bereiche zu checken. Der Fahrer 104 soll dabei ganz und gar nicht auf seinem Display eine Liste in einer vorgegebenen Reihenfolge abhaken. Er muss vielmehr beispielsweise das beschriebene Element in einem Übersichtsplan der Verkehrssituation an der richtigen Stelle relativ zum eigenen Fahrzeug mit dem Finger markieren oder auswählen. Das bedeutet, dass er beispielsweise bei einer Sprachansage "aktuelle Geschwindigkeit 130 km/h" mit dem Finger auf die richtige Tachoziffer klicken muss oder beispielsweise bei der Ansage "schnelle Annäherung von hinten auf der Überholspur" auf einer Displaydarstellung des eigenen Fahrzeugs 102 auf eine Position links hinter der Silhouette des Ego-Fahrzeugs 102 die Information örtlich zuordnen muss.

Parallel zu den Schritten S10 bis S18 umfasst das Verfahren einen Schritt S20 in Form von einem optionalen Speichern der erfassten Informationen, der übermittelten Informationen und der Wahrnehmung des Fahrers 104. Die Übergabeprozedur inklusive aller Sensordaten und gegebenen wie aufgenommenen Informationen werden beispielsweise in einer Art Black Box gespeichert.

Die Verwendung eines solchen Systems in einem automatisierten Fahrzeug (SAE Level 3 und höher) kann sehr effektiv dazu beitragen die Verkehrssicherheit bei einer erforderlichen Fahrerübernahme zu erhöhen. Es unterstützt den menschlichen Fahrer 104 wirksam bei der systematischen Erfassung der Verkehrssituation, die der Fahrer 104 anschließend manuell zu bewältigen hat. Diese wirksame Hilfe ist jedoch nicht nur als optionale Unterstützung zu verwenden, sondern kann in der zuvor beschriebenen Ausführungsform durch eine einfache Checklisten-Bestätigung der vom Fahrzeug erfassten Umgebungsinformationen zu einer verpflichtenden Erfassung des notwendigen Informationsumfanges ausgestaltet werden.

Das Verfahren kann wie folgt modifiziert werden.

Das Verfahren kann optisches Eingeben der Wahrnehmung des Fahrers 104 umfassen. Während die Informationen in Schritt S14 akustisch übermittelt werden, muss der Fahrer 104 jeweils den Ort der visuellen Informationsübermittlung mit seinen Augen fixieren. Dies wird beispielsweise durch ein im Fahrzeug verbautes Eye Tracking System registriert. Hierbei muss die visuelle Informationsdarstellung nicht notwendigerweise konzentriert auf einem Display dargestellt werden, sondern kann auch die Sicht durch die Scheiben auf die umgebenden Fahrzeuge direkt, oder die Rückspiegel oder ein Head-up-Display, oder Anzeigen am Rand der Scheiben oder das Kombiinstrument oder einen Touchscreen in der Mittelkonsole betreffen, weshalb die Darstellung hinsichtlich ihrer Position variiert werden kann, wie oben beschrieben wurde. Durch diese Form einer Überprüfung der Informationserfassung kann man beim Fahrer 104 zusätzlich eine hohe Wahrnehmungsqualität der Raum-Lage-Informationen in Bezug auf seine Umgebung erzielen. Diese Variante der Blickfolgenregistrierung für das abgleichen verlangt, dass bei einer Sprachansage, wie beispielsweise "aktuelle Geschwindigkeit 130 km/h" ein Tachoblick des Fahrers 104 erfolgen muss, und dann beispielsweise bei der Ansage "schnelle Annäherung von hinten auf der Überholspur" ein fokussierender Blick in den linken Außenspiegel erfolgen muss. Bei dieser beschriebenen Ausführungsform erfolgt somit eine Begleitung der visuellen Checks im Sichtumfeld des Fahrers 104 mit einer wirksamen Blickregistrierung der betrachteten Objekte.

Durch die bei den zuvor beschriebenen Ausführungsformen technische Kontrollierbarkeit der Informationsaufnahme des Menschen kann das Fahrzeug und damit der Fahrzeughersteller sichergehen, dass der menschliche Fahrer 104 tatsächlich das erforderliche Situationsbewusstsein besitzt. Dies ist in einem Fahrdatenschreiber auch leicht dokumentierbar und für mögliche spätere juristische Klärungen einer Unfallschuldfrage verwendbar.

Das Verfahren kann akustisches Eingeben der Wahrnehmung des Fahrers 104 umfassen. Als eine weitere alternative oder zusätzliche Variante ließen sich beispielsweise die Fragen des Fahrzeugs 102 auch durch Spracheingabe des Fahrers 104 beantworten. Auf die Frage beispielsweise "linke Spur?" müsste der Fahrer 104 dann beispielsweise laut und deutlich sprechen "einzelner Motorrad-Scheinwerfer schnell annähernd". Hierbei müssten die Fragen offen formuliert sein und der Fahrer 104 muss seine Wahrnehmung mit zusätzlich wahrgenommenen Informationen artikulieren, die das System wiederum als stimmig bewerten muss. Diese Variante erfordert gegebenenfalls einen höheren Entwicklungsaufwand als die zuvor beschriebenen Varianten, um einen Dialogablauf zu generieren, der stringent mit möglichst wenigen Missverständnissen und Rückfragen erfolgen kann.

Selbstverständlich ist es erforderlich, bei fehlerhaften Antworten/Reaktionen des Fahrers 104 eine erneute Nachfrage zu generieren. Wenn sich, was häufig zu erwarten ist, während des Abfrageprozesses die Situation verändern, so ist ebenfalls eine teilweise Neuabfrage erforderlich, damit der Fahrer 104 aufgefordert wird, die Veränderung zu überprüfen. Diese Ausführungsform erfordert einen fortschrittlichen Spracherkennungsalgorithmus, um die möglichen Antwortvarianten entsprechend genau interpretieren zu können oder ein intensives Sprechertraining, damit sich der Fahrer 104 auf ein vorgegebenes Antwortschema einübt, das eine korrekte Informationsregistrierung erlaubt.

Durch die oben beschriebenen Erläuterungen wird deutlich, dass es sich bei dem erfindungsgemäßen Fahrassistenzsystem 100 um ein interaktives multimediales Dialogsystem handelt, das durch seine situationsadaptive Dialogführung sicherstellen soll, dass das Kognitionsniveau eines menschlichen Fahrers 104 inhaltlich übereinstimmend dem Informationsniveau der kognitiven Fahrzeugsensorik angepasst wird. Eine Freischaltung der verantwortlichen Fahrzeugführung auf den menschlichen Fahrer 104 erfolgt nur dann, wenn sich die Kritikalität der Wahrnehmungsdifferenzen unterhalb eines vorgegebenen Grenzwertes bewegt. Die vorliegende Erfindung ist dabei nicht auf Kraftfahrzeuge beschränkt, sondern auch im Bereich der Luftfahrt einsetzbar, also für Flugzeug-Piloten. Auch dort ist beim Verantwortungsübergang zwischen Autopilot und menschlichem Piloten die Erzeugung eines Situationsbewusstseins sehr wichtig.

Ebenso ist eine Verwendung für einen Remote-Fahrer, der eine ferngesteuerte manuelle Übernahme eines Level 4 bzw. Level 5-Fahrzeuges aus einer Leitwarte/Kontrollzentrale vornimmt, gut denkbar.

### Bezugszeichenliste

- 100: Fahrassistenzsystem
- 102: Fahrzeug
- 104: Fahrer
- 106: Sensor
- 108: Übermittlungsvorrichtung
- 110: akustische Ausgabevorrichtung
- 112: visuelle Ausgabevorrichtung
- 114: Abgleichvorrichtung
- 116: Eingabevorrichtung
- 118: Blickerfassungsvorrichtung
- 120: Freigabevorrichtung
- 122: Speichervorrichtung
- 200: erster Regelkreis
- 202: automatisierte Fahrfunktion
- 204: Umgebung
- 206: Zufuhr von Daten oder Informationen zur automatisierten Fahrfunktion
- 208: Steuerung Fahrzeug
- 210: Informationsübermittlung vom Fahrzeug zur automatisierten Fahrfunktion
- 212: Beeinflussung Umgebung durch Fahrzeug
- 214: Interaktion zwischen automatisierter Fahrfunktion und Fahrer
- 216: Interaktion zwischen Fahrer und automatisierter Fahrfunktion
- 218: Beeinflussung Fahrer durch Fahrzeug
- 220: Beeinflussung Fahrer durch Umgebung
- 300: zweiter Regelkreis
- 302: Zufuhr von Daten oder Informationen zur automatisierten Fahrfunktion
- 304: Steuerung Fahrzeug
- 306: Informationsübermittlung vom Fahrzeug zur automatisierten Fahrfunktion
- 308: Beeinflussung Umgebung durch Fahrzeug
- 310: Beeinflussung automatisierte Fahrfunktion durch Fahrer
- 312: Interaktion zwischen automatisierter Fahrfunktion und Fahrer
- 314: Beeinflussung Fahrer durch Fahrzeug
- 316: Beeinflussung Fahrer durch Umgebung
- 400: dritter Regelkreis
- 402: Zufuhr von Daten oder Informationen zur automatisierten Fahrfunktion
- 404: Steuerung Fahrzeug
- 406: Informationsübermittlung vom Fahrzeug zur automatisierten Fahrfunktion
- 408: Beeinflussung Umgebung durch Fahrzeug
- 410: Interaktion zwischen automatisierter Fahrfunktion und Fahrer
- 412: Interaktion zwischen Fahrer und automatisierter Fahrfunktion
- 414: Beeinflussung Fahrer durch Fahrzeug
- 416: Beeinflussung Fahrer durch Umgebung
- S10: Erfassen von Informationen über aktuellen Fahrzeugstatus und Verkehrsszenario
- S12: Aufforderung zur Fahrerübernahme
- S14: Übermitteln der Informationen an Fahrer
- S16: Abgleichen der übermittelten Informationen und einer Wahrnehmung des Fahrers
- S18: Freigeben eines Übergangs
- S20: Speichern der erfassten Informationen, der übermittelten Informationen und der Wahrnehmung des Fahrers

## Patentansprüche

1. Fahrassistenzsystem (100) für ein automatisiert fahrbares Fahrzeug (102), umfassend mehrere Sensoren (106) zum Erfassen von Informationen über einen aktuellen Fahrzeugstatus und ein Verkehrsszenario während eines automatisierten Fahrzustand des Fahrzeugs (102),
mindestens eine Übermittlungsvorrichtung (108) zum multimodalen Übermitteln der Informationen an einen Fahrer (104) des Fahrzeugs (102), und
eine Abgleichvorrichtung (114) zum Abgleichen der übermittelten Informationen und einer Wahrnehmung des Fahrers (104) von den übermittelten Informationen, wobei die Informationen mindestens eine Information sind ausgewählt aus der Gruppe bestehend aus: Grund für eine Übernahmeanforderung, Straßenname, Straßenart, aktuelle Fahrspur, aktuelle Fahrrichtung, aktuelle Geschwindigkeit, aktuell gültige Verkehrsbeschränkung, aktueller Umgebungszustand von Sicht, aktueller Umgebungszustand der Straße, Typen der umgebenden Fahrzeuge, Positionen der umgebenden Fahrzeuge, Zustand der umgebenden Fahrzeuge, Gegenverkehr, Geschwindigkeiten der umgebenden Fahrzeuge, Wettersituation, Fahrbahnzustand und Fahrtziel.

2. Fahrassistenzsystem (100) nach dem vorhergehenden Anspruch, wobei die Informationen mehrere Informationen sind ausgewählt aus der Gruppe bestehend aus: Grund für eine Übernahmeanforderung, Straßenname, Straßenart, aktuelle Fahrspur, aktuelle Fahrrichtung, aktuelle Geschwindigkeit, aktuell gültige Verkehrsbeschränkung, aktueller Umgebungszustand von Sicht, aktueller Umgebungszustand der Straße, Typen der umgebenden Fahrzeuge, Positionen der umgebenden Fahrzeuge, Zustand der umgebenden Fahrzeuge, Gegenverkehr, Geschwindigkeiten der umgebenden Fahrzeuge, Wettersituation, Fahrbahnzustand und Fahrtziel.

3. Fahrassistenzsystem (100) nach einem der vorhergehenden Ansprüche, wobei die Sensoren (106) eine Kamera, einen GPS-Sensor, einen LIDAR-Sensor, einen Ultraschall-Sensor, einen Radar-Sensor, einen Geschwindigkeitssensor, einen Kompass und/oder ein Gyroskop umfassen.

4. Fahrassistenzsystem (100) nach einem der vorhergehenden Ansprüche, wobei die Übermittlungsvorrichtung (108) mindestens eine visuelle Ausgabevorrichtung (112) zum visuellen Übermitteln der Informationen an den Fahrer (104) und eine weitere Ausgabevorrichtung zum Übermitteln der Informationen an den Fahrer in einer von visuell verschiedenen Form, insbesondere eine akustische Ausgabevorrichtung (110) zum akustischen Übermitteln der Informationen an den Fahrer (104), umfasst.

5. Fahrassistenzsystem (100) nach dem vorhergehenden Anspruch, wobei die visuelle Ausgabevorrichtung (112) zum Darstellen der übermittelten Informationen als Checkliste ausgebildet ist.

6. Fahrassistenzsystem (100) nach einem der beiden vorhergehenden Ansprüche, wobei die visuelle Ausgabevorrichtung (112) zum Variieren einer Darstellung der übermittelten Informationen und/oder zum Gewichten der Darstellung der übermittelten Informationen ausgebildet ist.

7. Fahrassistenzsystem (100) nach dem vorhergehenden Anspruch, wobei die visuelle Ausgabevorrichtung (112) zum Anpassen einer Reihenfolge der Darstellung der übermittelten Informationen an eine Geschwindigkeit einer Veränderung der erfassten Informationen über den aktuellen Fahrzeugstatus und das Verkehrsszenario ausgebildet ist.

8. Fahrassistenzsystem (100) nach einem der vorhergehenden Ansprüche, wobei die Abgleichvorrichtung (114) eine Eingabevorrichtung (116) zum Eingeben der Wahrnehmung des Fahrers (104) aufweist.

9. Fahrassistenzsystem (100) nach dem vorhergehenden Anspruch, wobei die Eingabevorrichtung (116) zum manuellen und/oder optischen und/oder akustischen Eingeben der Wahrnehmung des Fahrers (104) ausgebildet ist.

10. Fahrassistenzsystem (100) nach dem vorhergehenden Anspruch, wobei die Eingabevorrichtung (116) eine Blickerfassungsvorrichtung (118) aufweist oder als Blickerfassungsvorrichtung (118) ausgebildet ist.

11. Fahrassistenzsystem (100) nach einem der vorhergehenden Ansprüche, wobei die Übermittlungsvorrichtung (108) zum Wiederholen der Übermittlung der Informationen ausgebildet ist, falls die Abgleichvorrichtung (114) eine Abweichung der Wahrnehmung von den übermittelten Informationen feststellt.

12. Fahrassistenzsystem (100) nach einem der vorhergehenden Ansprüche, weiterhin umfassend eine Freigabevorrichtung (120), wobei die Freigabevorrichtung (120) zum Freigeben eines Übergangs von dem automatisierten Fahrzustand des Fahrzeugs (102) in einen manuellen Fahrzustand des Fahrzeugs (102) ausgebildet ist, falls die Abgleichvorrichtung (114) eine Übereinstimmung der Wahrnehmung mit den übermittelten Informationen feststellt.

13. Fahrassistenzsystem (100) nach einem der vorhergehenden Ansprüche, weiterhin umfassend eine Speichervorrichtung (122), die zum Speichern der von den Sensoren (106) erfassten Informationen, der von der Übermittlungsvorrichtung (108) übermittelten Informationen und der Wahrnehmung des Fahrers (104) ausgebildet ist.

14. Computerimplementiertes Verfahren zum Assistieren eines Fahrers (104) eines automatisiert fahrbaren Fahrzeugs (102), umfassend
- Erfassen von Informationen über einen aktuellen Fahrzeugstatus und ein Verkehrsszenario während eines automatisierten Fahrzustand des Fahrzeugs (102),
- multimodales Übermitteln der Informationen an den Fahrer (104), und
- Abgleichen der übermittelten Informationen und einer Wahrnehmung des Fahrers (104) von den übermittelten Informationen, wobei die Informationen mindestens eine Information sind ausgewählt aus der Gruppe bestehend aus: Grund für eine Übernahmeanforderung, Straßenname, Straßenart, aktuelle Fahrspur, aktuelle Fahrrichtung, aktuelle Geschwindigkeit, aktuell gültige Verkehrsbeschränkung, aktueller Umgebungszustand von Sicht, aktueller Umgebungszustand der Straße, Typen der umgebenden Fahrzeuge, Positionen der umgebenden Fahrzeuge, Zustand der umgebenden Fahrzeuge, Gegenverkehr, Geschwindigkeiten der umgebenden Fahrzeuge, Wettersituation, Fahrbahnzustand und Fahrtziel.

15. Computerprogramm, das dazu eingerichtet ist, bei Ablauf auf einem Computer oder Computer-Netzwerk das Verfahren nach Anspruch 14 auszuführen.
